(19) Europäisches Patentamt
European Patent Office
Office européen des brevets

(11) **EP 4 614 938 A1**

(12) **EUROPEAN PATENT APPLICATION**
published in accordance with Art. 153(4) EPC

(43) Date of publication:
**10.09.2025  Bulletin 2025/37**

(21) Application number: **23890687.9**

(22) Date of filing: **09.11.2023**

(51) International Patent Classification (IPC):
**H04L 47/20** (2022.01)

(52) Cooperative Patent Classification (CPC):
**H04L 47/20; H04W 28/10; H04W 28/18**

(86) International application number:
**PCT/CN2023/130858**

(87) International publication number:
**WO 2024/104253 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.11.2022   CN 202211437855
28.01.2023   CN 202310091053**

(71) Applicant: **Huawei Technologies Co., Ltd.
Shenzhen, Guangdong 518129 (CN)**

(72) Inventor: **SUN, Haiyang
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD, DEVICE, AND SYSTEM**

(57)    This application provides a communication method, apparatus, and system, to resolve a problem that high transmission overheads are needed between an SMF network element and a PCF network element to transmit a TSN parameter. In technical solutions provided in this application, when determining that a cellular communication system supports interworking with a TSN or there is an interworking requirement between the cellular communication system and the TSN, the PCF network element generates, based on a maximum value of a TSC burst size, an MDBV value corresponding to a session, and sends the MDBV value to the SMF network element. After receiving the MDBV value, the SMF network element determines merged stream requirement information based on the MDBV value. According to the method in this application, system transmission overheads can be reduced, and accurate merged stream requirement information can be obtained.

[FIG. 10]

**Description**

This application claims priorities to Chinese Patent Application No. 202211437855.1, filed with the China National Intellectual Property Administration on November 16, 2022 and entitled "COMMUNICATION METHOD, APPARATUS, AND SYSTEM", and to Chinese Patent Application No. 202310091053.8, filed with the China National Intellectual Property Administration on January 28, 2023 and entitled "COMMUNICATION METHOD, APPARATUS, AND SYSTEM", both of which are incorporated herein by reference in their entireties.

TECHNICAL FIELD

This application relates to the communication field, and in particular, to a communication method, a communication apparatus, a computer-readable storage medium, a computer program product, and a communication system.

BACKGROUND

A time sensitive network (time sensitive network, TSN) can provide a reliable transmission service with a delay, to resolve a problem of a high forwarding delay in a conventional Ethernet network.

Currently, a cellular communication system may interwork with the TSN. For example, a session management function (session management function, SMF) network element in a 5th generation (the 5th generation, 5G) system may be used as a centralized user configuration (centralized user configuration, CUC) in a TSN system, and an access network (access network, AN) device and a user plane function (user plane function, UPF) network element in the 5G system may be used as TSN terminals, namely, a talker (talker) and a listener (listener). The SMF network element may generate talker group information and listener group information, and send the talker group information and the listener group information to a centralized network configuration (centralized network configuration, CNC) network element in the TSN system, so that the CNC network element may configure the TSN terminal based on the talker group information and the listener group information. The talker group information includes a traffic parameter, and the traffic parameter includes parameters such as a maximum frame length and a latest transmit offset. When generating the maximum frame length and the latest transmit offset, the SMF network element needs to first obtain a TSN parameter from a policy control function (policy control function, PCF) network element in the 5G system, where the TSN parameter includes a maximum value of a burst size; and then calculate the maximum frame length and the latest transmit offset based on the maximum value of the burst size.

In this method, high transmission overheads are needed between the SMF network element and the PCF network element to transmit the TSN parameter.

SUMMARY

This application provides a communication method, a communication apparatus, a computer-readable storage medium, a computer program product, and a communication system, to resolve a problem in a conventional technology that high transmission overheads are needed between an SMF network element and a PCF network element to transmit a TSN parameter.

According to a first aspect, this application provides a communication method. The method is applied to a policy control function PCF network element. The method includes: when determining that a new radio cellular communication system supports interworking with a time sensitive network or there is an interworking requirement between the cellular communication system and the time sensitive network, generating, based on a maximum value of a time sensitive communication burst size, a maximum data burst volume value corresponding to a session, where the maximum data burst volume value is equal to the maximum value of the time sensitive communication burst size; and sending the maximum data burst volume value to a session management function network element, where the maximum data burst volume value is for determining merged stream requirement information associated with the session.

The cellular communication system may include a 5G system. Optionally, the cellular communication system may further include a future communication system, for example, 6G.

In this method, when calculating the merged stream requirement information, the session management function network element may directly perform calculation based on the maximum data burst volume value obtained from the policy control function network element. In this way, the session management function network element may not need to additionally obtain such a parameter, namely, the maximum value of the time sensitive communication burst size, from the policy control function network element, so that transmission overheads are reduced. In addition, in this method, the maximum data burst volume value is equal to the maximum value of the time sensitive communication burst size, so that the merged stream requirement information obtained by the session management function network element through calculation based on the maximum data burst volume value is equivalent to merged stream requirement information obtained by the session management function network element through calculation based on the maximum value of the time sensitive communication burst size in a conventional technology, to obtain accurate merged stream requirement information.

In some possible implementations, the method further includes: receiving first information from a first network element, where the first information is for determining that the cellular communication system supports interworking with the time sensitive network or there is an interworking requirement between the cellular communication system and the time sensitive network.

In this method, the policy control function network element may determine, based on the first information, that the cellular communication system supports interworking with the time sensitive network or there is an interworking requirement between the cellular communication system and the time sensitive network. In other words, when receiving the first information, the policy control function network element sets the maximum data burst volume value to a value equal to the maximum value of the time sensitive communication burst size, so that after receiving the maximum data burst volume value, the session management function network element may generate the merged stream requirement information based on the maximum data burst volume value. This helps obtain accurate merged stream requirement information while reducing transmission overheads.

In some possible implementations, the first network element is the session management function network element.

In this implementation, the first information indicates at least one of the following: The session management function network element supports interworking with the time sensitive network, there is an interworking requirement between the session management function network element and the time sensitive network, the session management function network element has a function of a centralized user configuration network element, a data network name corresponding to the session is applicable to a time sensitive communication service, and network slice information corresponding to the session is applicable to a time sensitive communication service.

Because the session management function network element is a network element in the 5G system, that the session management function network element supports interworking with the time sensitive network may be equivalent to that the 5G system supports interworking with the time sensitive network. Similarly, that there is an interworking requirement between the session management function network element and the time sensitive network may be equivalent to that there is an interworking requirement between the 5G system and the time sensitive network.

In this implementation, the first information is sent by the session management function network element, and the first information may perform indication directly or indirectly.

In an example, the first information may include indication information indicating that the session management function network element supports interworking with the time sensitive network or there is an interworking requirement between the session management function network element and the time sensitive network.

The session management function network element may generate the first information based on a condition. The condition includes at least one of the following: The session management function network element has the function of the centralized user configuration network element, the data network name corresponding to the session is applicable to a time sensitive communication service, and the network slice information corresponding to the session is applicable to a time sensitive communication service.

In this example, the session management function network element first generates the first information based on the condition, and then sends the first information to the policy control function network element. In this way, after receiving the first information, the policy control function network element may directly set the maximum data burst volume value to the value equal to the maximum value of the time sensitive communication burst size, to reduce power consumption of the policy control function network element.

In another example, the first information indicates at least one of the following: The session management function network element has a function of the centralized user configuration network element, the data network name corresponding to the session is applicable to a time sensitive communication service, and the network slice information corresponding to the session is applicable to a time sensitive communication service.

In this example, the session management function network element directly sends the first information to the policy control function network element. After receiving the first information, the policy control function network element first determines, based on the first information, that the session management function network element supports interworking with the time sensitive network or there is an interworking requirement between the session management function network element and the time sensitive network, and then sets the maximum data burst volume value to the value equal to the maximum value of the time sensitive communication burst size. In other words, the session management function does not need to generate other information based on the first information, so that power consumption of the session management function network element is reduced.

In some possible implementations, the method further includes: sending second information to the session management function network element, where the second information indicates the session management function network element to send the first information to the policy control function network element when the session management function network element supports interworking with the time sensitive network or there is an interworking requirement between the session management function network element and the time sensitive network.

Optionally, the second information may include a policy control request trigger, the policy control request trigger is configured to: when the session management function network element supports interworking with the time sensitive network or there is an interworking requirement between the session management function network element and the time sensitive network, trigger the session management function network element to send the first information to the policy control function network element.

In this method, the first information is sent when the session management function network element determines that the session management function network element supports interworking with the time sensitive network or there is an interworking requirement between the session management function network element and the time sensitive network. In other words, when the session management function network element does not support interworking with the time sensitive network or there is no interworking requirement between the session management function network element and the time sensitive network, the session management function network element does not need to send the first information to the policy control function network element. This helps reduce unnecessary transmission overheads.

In some possible implementations, the first network element is an application function network element.

In this implementation, the first information indicates at least one of the following: The application function network element supports interworking with the time sensitive network, there is an interworking requirement between the application function network element and the time sensitive network, a delay requirement in an application function request is less than or equal to a preset threshold, the application function request includes assistance container information, and the application function request includes burst arrival time information.

Because the application function network element is a network element in the 5G system, that the application function network element supports interworking with the time sensitive network may be equivalent to that the 5G system supports interworking with the time sensitive network. Similarly, that there is an interworking requirement between the application function network element and the time sensitive network may be equivalent to that there is an interworking requirement between the 5G system and the time sensitive network.

In this implementation, the first information is sent by the application function network element, and the first information may perform indication directly or indirectly.

In an example, the first information may include indication information indicating that the application function network element supports interworking with the time sensitive network or there is an interworking requirement between the application function network element and the time sensitive network.

The application function network element may generate the first information based on a condition. The condition includes at least one of the following: The delay requirement in the application function request is less than or equal to the preset threshold, the application function request includes the assistance container information, and the application function request includes the burst arrival time information.

In this example, the application function network element first generates the first information based on the condition, and then sends the first information to the policy control function network element. In this way, after receiving the first information, the policy control function network element may directly set the maximum data burst volume value to the value equal to the maximum value of the time sensitive communication burst size, to reduce power consumption of the policy control function network element.

In another example, the first information indicates at least one of the following: The delay requirement in the application function request is less than or equal to the preset threshold, the application function request includes the assistance container information, and the application function request includes the burst arrival time information.

In this example, the application function network element directly sends the first information to the policy control function network element. After receiving the first information, the policy control function network element first determines, based on the first information, that the session management function network element supports interworking with the time sensitive network or there is an interworking requirement between the session management function network element and the time sensitive network, and then sets the maximum data burst volume value to the value equal to the maximum value of the time sensitive communication burst size. In other words, the application function does not need to generate other information based on the first information, so that power consumption of the application function network element is reduced.

In some possible implementations, the determining that a cellular communication system supports interworking with a time sensitive network or there is an interworking requirement between the cellular communication system and the time sensitive network includes: receiving third information from the session management function network element, where the third information includes a data network name and/or network slice information that correspond/corresponds to the session; and determining, based on the third information, that the cellular communication system supports interworking with the time sensitive network or there is an interworking requirement between the cellular communication system and the time sensitive network.

That the policy control function network element determines, based on the third information, that the cellular communication system supports interworking with the time sensitive network or there is an interworking requirement between the cellular communication system and the time sensitive network includes: The policy control function network element determines, based on the third information and a local configuration, that the cellular communication system supports interworking with the time sensitive network or there is an interworking requirement between the cellular communication system and the time sensitive network.

For example, it is assumed that the local configuration includes a data network name and/or network slice information for supporting interworking with the time sensitive network. When the local configuration includes the third information, the policy control function network element determines that a 5G network supports interworking with the time sensitive network or there is an interworking requirement between the 5G network and the time sensitive network. When the local configuration does not include the third information, the policy control function network element determines that a 5G network does not support interworking with the time sensitive network or there is no interworking requirement between the 5G network and the time sensitive network.

For another example, it is assumed that the local configuration includes a network identifier and indication information corresponding to the network identifier, the network identifier may include at least one data network name and/or at least one piece of network slice information, and the indication information indicates whether interworking with the time sensitive network is supported. When the local configuration includes the third information and indication information corresponding to the third information indicates that interworking with the time sensitive network is supported, the policy control function network element determines that a 5G network supports interworking with the time sensitive network or there is an interworking requirement between the 5G network and the time sensitive network. Otherwise, the policy control function network element determines that a 5G network does not support interworking with the time sensitive network or there is no interworking requirement between the 5G network and the time sensitive network.

In this method, the policy control function network element determines, based on the third information and the local configuration, that the cellular communication system supports interworking with the time sensitive network or there is an interworking requirement between the cellular communication system and the time sensitive network. In this way, when determining that the 5G network supports interworking with the time sensitive network or there is an interworking requirement between the 5G network and the time sensitive network, the policy control function network element sets the maximum data burst volume value to the value equal to the maximum value of the time sensitive communication burst size, and then sends the maximum data burst volume value to the session management function network element, so that the session management function network element can calculate the merged stream requirement information based on the maximum data burst volume value. In this way, the session management function network element does not need to additionally obtain such a parameter, namely, the maximum value of the time sensitive communication burst size, from the policy control function network element, and directly performs calculation based on the maximum data burst volume value obtained from the policy control function network element. This can reduce transmission overheads, and accurate merged stream requirement information can be obtained.

In some possible implementations, the determining that a cellular communication system supports interworking with a time sensitive network or there is an interworking requirement between the cellular communication system and the time sensitive network includes: receiving fourth information from an application function network element, where the fourth information includes a data network name and/or network slice information that correspond/corresponds to an application function request; and determining, based on the fourth information, that the cellular communication system supports interworking with the time sensitive network or there is an interworking requirement between the cellular communication system and the time sensitive network.

That the policy control function network element determines, based on the fourth information, that the cellular communication system supports interworking with the time sensitive network or there is an interworking requirement between the cellular communication system and the time sensitive network includes: The policy control function network element determines, based on the fourth information and a local configuration, that the cellular communication system supports interworking with the time sensitive network or there is an interworking requirement between the cellular communication system and the time sensitive network.

For example, it is assumed that the local configuration includes a data network name and/or network slice information for supporting interworking with the time sensitive network. When the local configuration includes the fourth information, the policy control function network element determines that a 5G network supports interworking with the time sensitive network or there is an interworking requirement between the 5G network and the time sensitive network. When the local configuration does not include the fourth information, the policy control function network element determines that a 5G network does not support interworking with the time sensitive network or there is no interworking requirement between the 5G network and the time sensitive network.

For another example, it is assumed that the local configuration includes a network identifier and indication information corresponding to the network identifier, the network identifier may include a data network name and/or network slice information that correspond/corresponds to each of at least one application function request, and the indication information indicates whether interworking with the time sensitive network is supported. When the local configuration includes the fourth information and indication information corresponding to the fourth information indicates that interworking with the time sensitive network is supported, the policy control function network element determines that a 5G network supports interworking with the time sensitive network or there is an interworking requirement between the 5G network and the time sensitive network. Otherwise, the policy control function network element determines that a 5G network does not support interworking with the time sensitive network or there is no interworking requirement between the 5G network and the time sensitive network.

In this method, the policy control function network element determines, based on the fourth information and the local configuration, that the cellular communication system supports interworking with the time sensitive network or there is an interworking requirement between the cellular communication system and the time sensitive network. In this way, when determining that the 5G network supports interworking with the time sensitive network or there is an interworking requirement between the 5G network and the time sensitive network, the policy control function network element sets the maximum data burst volume value to the value equal to the maximum value of the time sensitive communication burst size, and then sends the maximum data burst volume value to the session management function network element, so that the session management function network element can calculate the merged stream requirement information based on the maximum data burst volume value. In this way, the session management function network element does not need to additionally obtain such a parameter, namely, the maximum value of the time sensitive communication burst size, from the policy control function network element, and directly performs calculation based on the maximum data burst volume value obtained from the policy control function network element. This can reduce transmission overheads, and accurate merged stream requirement information can be obtained.

In some possible implementations, the merged stream requirement information includes a maximum frame length and/or a latest transmit offset.

When the merged stream requirement information includes the maximum frame length, the session management function network element may calculate the maximum frame length according to Formula (1):

$$S=S1-S2 \text{ (1)}$$

S represents the maximum frame length, S1 represents the maximum data burst volume value, and S2 represents framing bits (such as a CRC and a GTP-U tunnel header) that are not for transmission in the 5G system.

When the merged stream requirement information includes the latest transmit offset, the session management function network element may calculate the latest transmit offset according to Formula (2):

$$a=b+c-(d+t_s) \text{ (2)}$$

a represents an earliest transmit offset, b represents an interval, c represents jitter, and $t_s$ represents time for transmitting the maximum frame length.

Optionally, after obtaining the maximum frame length through calculation, the session management function network element may locally store the maximum frame length. In this way, the session management function network element may calculate the latest transmit offset based on the locally stored maximum frame length.

In this method, because the maximum data burst volume value is equal to the maximum value of the time sensitive communication burst size, when the session management function network element determines the merged stream requirement information based on the maximum data burst volume value, the session management function network element may obtain accurate merged stream requirement information.

According to a second aspect, this application provides a communication method. The method is applied to a session management function SMF network element. The method includes: receiving a maximum data burst volume value corresponding to a session from a policy control function network element, where the maximum data burst volume value is equal to a maximum value of a time sensitive communication burst size; determining, based on the maximum data burst volume value, merged stream requirement information; and sending the merged stream requirement information to a centralized network configuration network element in a time sensitive network.

In some possible implementations, before the receiving first information from a policy control function network element, the method further includes: sending first information to the policy control function network element, where the first information indicates that a cellular communication system supports interworking with the time sensitive network or there is an interworking requirement between the cellular communication system and the time sensitive network.

In some possible implementations, the first information includes indication information indicating that the session management function network element supports interworking with the time sensitive network or there is an interworking requirement between the session management function network element and the time sensitive network.

In some possible implementations, the method further includes: generating the first information based on a condition. The condition includes at least one of the following: The session management function network element has a function of a centralized user configuration network element, a data network name corresponding to the session is applicable to a time sensitive communication service, and network slice information corresponding to the session is applicable to a time sensitive communication service.

In some possible implementations, a function of a network element, a data network name corresponding to the session is applicable to a time sensitive communication service, and network slice information corresponding to the session is applicable to a time sensitive communication service.

In some possible implementations, the method further includes: receiving second information from the policy control function network element.

The sending first information to the policy control function network element includes: sending the first information to the policy control function network element based on the second information when the session management function network element supports interworking with the time sensitive network or there is an interworking requirement between the session management function network element and the time sensitive network.

In some possible implementations, the second information includes a policy control request trigger. The sending second information to the policy control function network element includes: sending the second information to the policy control function network element based on the policy control request trigger.

In some possible implementations, the method further includes: sending third information to the policy control function network element, where the third information includes the data network name and/or the network slice information that correspond/corresponds to the session.

In some possible implementations, the merged stream requirement information includes a maximum frame length and/or a latest transmit offset.

When the merged stream requirement information includes the maximum frame length, the determining, based on the maximum data burst volume value, merged stream requirement information includes: determining a first difference between the maximum data burst volume value and a framing bit that is not for transmission; and determining the maximum frame length based on the first difference. For a calculation method, refer to the foregoing Formula (1).

When the merged stream requirement information includes the latest transmit offset, the determining, based on the maximum data burst volume value, merged stream requirement information includes: determining the maximum frame length in the merged stream requirement information based on the maximum data burst volume value; determining a first sum of jitter in the merged stream requirement information and transmission time corresponding to the maximum frame length; determining a second sum of an earliest transmit offset and an interval in the merged stream requirement information; determining a second difference between the second sum and the first sum; and determining the latest transmit offset based on the second difference. For a calculation method, refer to the foregoing Formula (2).

According to a third aspect, this application provides a communication method. The communication method is applied to an application function AF network element. The method includes: sending first information to a policy control function network element, where the first information is for determining that a cellular communication system supports interworking with a time sensitive network or there is an interworking requirement between the cellular communication system and the time sensitive network, the first information indicates the policy control function network element to send a maximum data burst volume value corresponding to a session to the session management function network element, the maximum data burst volume value is equal to a maximum value of a time sensitive communication burst size, and the maximum data burst volume value is for determining merged stream requirement information associated with the session.

In some possible implementations, the first information includes at least one of the following: The application function network element supports interworking with the time sensitive network, there is an interworking requirement between the application function network element and the time sensitive network, a delay requirement in an application function request is less than or equal to a preset threshold, the application function request includes assistance container information, and the application function request includes burst arrival time information.

In some possible implementations, the method further includes: sending fourth information to the policy control function network element, where the fourth information includes a data network name and/or network slice information that correspond/corresponds to an application function request.

In some possible implementations, the merged stream requirement information includes a maximum frame length and/or a latest transmit offset.

According to a fourth aspect, this application provides a communication method. The method includes: When determining that a new radio cellular communication system supports interworking with a time sensitive network or there is an interworking requirement between the cellular communication system and the time sensitive network, a policy control function network element generates, based on a maximum value of a time sensitive communication burst size, a maximum data burst volume value corresponding to a session, where the maximum data burst volume value is equal to the maximum value of the time sensitive communication burst size; and sends the maximum data burst volume value to a session management function network element. The session management function network element determines, based on the maximum data burst volume value, merged stream requirement information. The session management function network element sends the merged stream requirement information to a centralized network configuration network element in the time sensitive network.

In some possible implementations, the method further includes: The session management function network element sends first information to the policy control function network element, where the first information indicates that the cellular communication system supports interworking with the time sensitive network or there is an interworking requirement between the cellular communication system and the time sensitive network.

In some possible implementations, the first information includes indication information indicating that the session management function network element supports interworking with the time sensitive network or there is an interworking requirement between the session management function network element and the time sensitive network.

In some possible implementations, the method further includes: The session management function network element generates the first information based on a condition. The condition includes at least one of the following: The session management function network element has a function of a centralized user configuration network element, a data network name corresponding to the session is applicable to a time sensitive communication service, and network slice information corresponding to the session is applicable to a time sensitive communication service.

In some possible implementations, the first information indicates at least one of the following: The session management function network element has a function of a centralized user configuration network element, a data network name corresponding to the session is applicable to a time sensitive communication service, and network slice information corresponding to the session is applicable to a time sensitive communication service.

In some possible implementations, the method further includes: The policy control function network element sends second information to the session management function network element, where the second information indicates the session management function network element to send the first information to the policy control function network element when the session management function network element supports interworking with the time sensitive network or there is an interworking requirement between the session management function network element and the time sensitive network.

In some possible implementations, the method further includes: The session management function network element sends third information to the policy control function network element, where the third information includes the data network name and/or the network slice information that correspond/corresponds to the session. The policy control function network element determines, based on the third information, that a 5G system supports interworking with the time sensitive network or there is an interworking requirement between the 5G system and the time sensitive network.

In some possible implementations, the merged stream requirement information includes a maximum frame length and/or a latest transmit offset.

In some possible implementations, when the merged stream requirement information includes the maximum frame length, that the session management function network element determines, based on the maximum data burst volume value, merged stream requirement information includes: determining a first difference between the maximum data burst volume value and a framing bit that is not for transmission; and determining the maximum frame length based on the first difference.

In some possible implementations, when the merged stream requirement information includes the latest transmit offset, that the session management function network element determines, based on the maximum data burst volume value, merged stream requirement information includes: determining the maximum frame length in the merged stream requirement information based on the maximum data burst volume value; determining a first sum of jitter in the merged stream requirement information and transmission time corresponding to the maximum frame length; determining a second sum of an earliest transmit offset and an interval in the merged stream requirement information; determining a second difference between the second sum and the first sum; and determining the latest transmit offset based on the second difference.

In some possible implementations, the method further includes: An application function network element sends first information to the policy control function network element, where the first information indicates that the cellular communication system supports interworking with the time sensitive network or there is an interworking requirement between the cellular communication system and the time sensitive network.

In some possible implementations, the first information indicates at least one of the following: The application function network element supports interworking with the time sensitive network, there is an interworking requirement between the application function network element and the time sensitive network, a delay requirement in an application function request is less than or equal to a preset threshold, the application function request includes assistance container information, and the application function request includes burst arrival time information.

In some possible implementations, the method further includes: The application function network element sends fourth information to the policy control function network element, where the fourth information includes a data network name and/or network slice information that correspond/corresponds to an application function request. That the policy control function network element determines that the cellular communication system supports interworking with the time sensitive network or there is an interworking requirement between the cellular communication system and the time sensitive network includes: determining, based on the fourth information, that a 5G system supports interworking with the time sensitive network or there is an interworking requirement between the 5G system and the time sensitive network.

According to a fifth aspect, this application provides a communication apparatus, including a module or a unit configured to implement the method in any one of the first aspect or the possible implementations of the first aspect. It should be understood that each module or unit may implement a corresponding function by executing a computer program.

According to a sixth aspect, this application provides a communication apparatus, including a module or a unit configured to implement the method in any one of the second aspect or the possible implementations of the second aspect. It should be understood that each module or unit may implement a corresponding function by executing a computer program.

According to a seventh aspect, this application provides a communication apparatus, including a module or a unit configured to implement the method in any one of the third aspect or the possible implementations of the third aspect. It should be understood that each module or unit may implement a corresponding function by executing a computer program.

According to an eighth aspect, this application provides a communication apparatus, including a processor. The processor is configured to perform the communication method in any one of the possible implementations of the first aspect to the third aspect.

The apparatus may further include a memory, configured to store instructions and data. The memory is coupled to the processor, and when executing the instructions stored in the memory, the processor may implement the method described in the foregoing aspects. The apparatus may further include a communication interface. The communication interface is used by the apparatus to communicate with another device. For example, the communication interface may be a transceiver, a circuit, a bus, a module, or another type of communication interface.

It may be understood that the communication apparatus provided in the fifth aspect to the eighth aspect may alternatively be a chip system.

According to a ninth aspect, this application provides a communication system. The communication system may include a policy control function network element and a session management function network element.

In some possible implementations, the communication system may further include an application function network element.

The policy control function network element, the session management function network element, and the application function network element may be configured to implement the method in any item of the fourth aspect.

According to a tenth aspect, this application provides a computer-readable storage medium. The computer-readable storage medium stores program code to be executed by a communication apparatus, and the program code includes instructions for implementing the method in the first aspect to the fourth aspect.

According to an eleventh aspect, this application provides a computer program product including instructions. When the computer program product runs on a communication apparatus, the communication apparatus is enabled to perform the method in the first aspect to the fourth aspect.

It may be understood that, for effects that can be obtained in the second aspect to the eleventh aspect, refer to the descriptions in the first aspect. Details are not described herein.

BRIEF DESCRIPTION OF DRAWINGS

FIG. 1 is a diagram of a TSN system architecture;
FIG. 2 is a diagram of a 5G system architecture to which an embodiment of this application is applicable;
FIG. 3 is a diagram of a network architecture in which a 5G system interworks with a TSN network;
FIG. 4 is a diagram of an internal processing delay of a 5G system switching node;
FIG. 5 is a diagram of a delay of a TSN stream in a 5G system;
FIG. 6 is a diagram of a 5G QoS model based on a QoS flow;
FIG. 7 is a diagram of a network architecture in which a 5G system interworks with a TSC service in a non-TSN network;
FIG. 8 is a diagram of another network architecture in which a 5G network interworks with a TSN network;
FIG. 9 is a diagram of still another network architecture in which a 5G network interworks with a TSN network;
FIG. 10 is a schematic flowchart of a communication method;
FIG. 11 is a diagram of a communication method according to an embodiment of this application;
FIG. 12 is a schematic flowchart of a communication method according to an embodiment of this application;
FIG. 13 is a schematic flowchart of a communication method according to another embodiment of this application;
FIG. 14 is a schematic flowchart of a communication method according to still another embodiment of this application;
FIG. 15 is a schematic flowchart of a communication method according to still another embodiment of this application;

FIG. 16 is a diagram of a structure of a communication apparatus according to an embodiment of this application;
FIG. 17 is a diagram of a structure of a communication apparatus according to another embodiment of this application;
FIG. 18 is a diagram of a structure of a communication apparatus according to still another embodiment of this application; and
FIG. 19 is a diagram of a structure of a communication apparatus according to an embodiment of this application.

DESCRIPTION OF EMBODIMENTS

The following describes technical solutions in embodiments of this application with reference to accompanying drawings in embodiments of this application.

To clearly describe the technical solutions in embodiments of this application, terms such as "first" and "second" are used in embodiments of this application to distinguish between same items or similar items that have basically the same functions and purposes. For example, first information and second information are merely for distinguishing between different information, and do not limit a sequence of the first information and the second information. A person skilled in the art may understand that the terms such as "first" and "second" do not limit a quantity or an execution sequence, and the terms such as "first" and "second" do not indicate a definite difference.

In embodiments of this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one of a, b, or c may indicate a, b, c, a and b, a and c, b and c, or a, b, and c. a, b, and c may be singular or plural.

A communication method in embodiments of this application may be applied to a network architecture in which a cellular communication system interworks with a TSN. The cellular communication system may include a 5G system. Optionally, the cellular communication system may further include some future communication systems, for example, a 6th generation (6th generation, 6G) system. Subsequently, this application uses the 5G system as an example for description.

To facilitate understanding of the communication method provided in embodiments of this application, the following describes a system architecture and an application scenario of the communication method provided in embodiments of this application. It may be understood that the system architecture and the application scenario that are described in embodiments of this application are intended to describe the technical solutions in embodiments of this application more clearly, and do not constitute a limitation on the technical solutions provided in embodiments of this application.

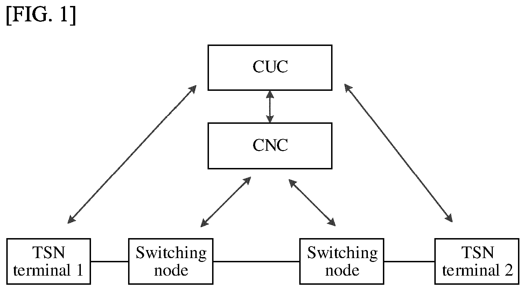

FIG. 1 is a diagram of a TSN system architecture. As shown in FIG. 1, the TSN system architecture includes a CUC network element, a CNC network element, TSN terminals, and at least one switching node. The TSN terminals include a TSN terminal 1 and a TSN terminal 2. The CUC network element and the CNC network element are in a management plane topology, and the TSN terminals and the at least one switching node are in a user plane topology.

Information transmission and exchange may be performed between the TSN terminal 1 and the TSN terminal 2 via the at least one switching node. In an example, when the TSN terminal 1 transmits information to the TSN terminal 2, the TSN terminal 1 is a talker, and the TSN terminal 2 is a listener. In another example, when the TSN terminal 2 transmits information to the TSN terminal 1, the TSN terminal 2 is a talker, and the TSN terminal 1 is a listener.

The CUC network element may be configured to: manage the TSN terminal and a service, obtain a capability of the TSN terminal and a user requirement, send a requirement of a TSN stream to the CNC network element, and configure the TSN terminal based on an indication of the CNC.

The CNC network element is responsible for managing the TSN terminal and the at least one switching node and receiving capability information of the at least one switching node. The CNC network element receives the requirement of the TSN stream, generates an end-to-end forwarding path of the TSN stream through calculation based on the requirement of the TSN stream, and delivers a scheduling parameter to the at least one switching node.

Each of the at least one switching node reports capability information and topology information of the switching node to the CNC, and schedules and forwards a data flow based on a rule delivered by the CNC. In this embodiment, the switching node may also be referred to as a bridge (bridge).

In the system, the information reported by the switching node to the CNC network element may include bridge information, a bridge capability, a bridge topology, a port traffic level and priority, and a stream parameter.

The bridge information includes a bridge number, a port quantity, and a port number list. The bridge number is for distinguishing between bridge instances. When the bridge is a 5G system node, the bridge number may be derived from a unique bridge medium access control (media access control, MAC) address, or may be set in a specific manner, to ensure that a unique value is used in a 5G system graph.

The bridge capability includes a bridge delay per port pair per traffic category, a propagation delay per port, and virtual local area network configuration information. The bridge delay per port pair per traffic category includes a 5G system bridge delay, an ingress port number, an egress port, and a traffic level. The 5G system bridge delay depends on and is independent of a frame size, and maximum and minimum values of the 5G system bridge delay are as follows: a maximum length-independent delay (independentDelayMax), a minimum length-independent delay (independentDelayMin), a maximum length-dependent delay (dependentDelayMax), and a minimum length-dependent delay (dependentDelayMin).

The length herein is a length of a frame. When a 5G system functions as a bridge, the maximum length-independent delay and the minimum length-independent delay are set based on a configuration. The 5G system sets the maximum length-dependent delay and the minimum length-dependent delay based on a time range in which a single octet of an Ethernet frame is transmitted from an ingress to an egress and time for receiving and storing each octet of the frame.

The propagation delay per port includes a transmission propagation delay and an egress port number.

In the system, information exchanged between the CUC network element and the CNC network element is referred to as user/network configuration information (user/network configeration, UNI), and the UNI may include talker group information, listener group information, and status (status) group information.

The talker group information includes information such as a stream identifier (StreamID), a stream rank (StreamRank), an end station interface (EndStationInterfaces), a data frame specification (DataFrameSpecification), a traffic specification (Traffic Specification), a user-to-network requirement (UserToNetworkRequirements), and an interface capability (InterfaceCapabilities) of an end node.

The stream identifier identifies a stream configuration, and includes two fields: a MAC address (MAC address) and a unique identifier (uniqueID). The MAC address is a source MAC address (optional) from which a stream is initiated, and a field length is 48 bits. The unique identifier is for distinguishing different streams of a same talker, and a field length is 16 bits.

The stream rank is for providing a rank of a stream relative to another stream in a network. The rank is for determining a resource configuration priority of the stream and is irrelevant to data of the stream. Currently, a value may be 0 or 1. The value 0 indicates a higher priority than the value 1 and usually indicates an emergency service. A quantity of stream ranks is not limited in embodiments of this application.

The end station interface, also referred to as an end node interface, is for describing an interface corresponding to a stream. One stream may include a plurality of interfaces. The end station interface includes two fields: a MAC address and an interface name (InterfaceName).

The data frame specification defines data of a stream and identifies a data packet of the stream. Then, a corresponding TSN configuration is applied. The data frame specification may include any one or more of the following fields.

IEEE802-MAC address: Indicates a source MAC address and a destination MAC address. A field length of the MAC address is 96 bits.

IEEE802-virtual local area network (virtual local area network, VLAN) tag: Indicates C tag (inner VLAN tag, identifying a user VLAN) information of a data frame, excludes an S tag (outer VLAN tag, identifying a carrier VLAN) and a drop eligible indicator (drop eligible indicator, DEI) field (the DEI field and a PCP field together identify a priority of the S tag). Optionally, a priority field (priority code point, PCP) field and a VLAN identifier (VLAN ID) field may be used. If there is only the PCP field, the VLAN identifier is set to 0. A field length of the VLAN tag is 24 bits.

Internet Protocol version 4 (internet protocol version 4, IPv4) tuple: Indicates IPv4 information of a data frame, and includes an IP 6-tuple. A 6-tuple of an IPv4 address may include a source IP address, a destination IP address, a differentiated services code point (differentiated services code point, DSCP), a protocol, a source port, and a destination port.

IPv6 tuple: Indicates IPv6 information of a data frame, and includes an IP 6-tuple. A 6-tuple of an IPv6 address includes a source IP address, a destination IP address, a DSCP, a protocol, a source port, and a destination port.

In this application, for information such as data types of the 6-tuple of the IPv4 address and the 6-tuple of the IPv6 address, refer to related content in the protocol IEEE Std 802.1Qcc.

The traffic specification defines how a talker sends a data frame. On a network side, the traffic specification may be used for allocating resources of each bridge and adjusting a sorting parameter. The traffic specification includes an interval (interval), a maximum quantity of frames in a periodicity (MaxFramesPerInterval), a maximum frame length (MaxFrameSize), and transmission selection (TransmissionSelection).

The interval describes maximum duration of a frame size (MaxFrameSize) and a frame quantity (MaxFramesPerInterval) that are defined by the talker. The duration is a rational number of seconds, defined by an unsigned 32-digit integer numerator and an unsigned 32-digit integer denominator, in other words, may be less than one second.

The maximum quantity of frames in a periodicity indicates a maximum quantity of frames sent in a periodicity.

The maximum frame length describes a maximum length of a frame that can be sent by the talker.

The transmission selection is for specifying a scheduling algorithm used in a stream forwarding process. 0 is used by default, indicating a strict priority.

Optionally, the transmission selection may further include information such as an earliest transmit offset (EarliestTransmitOffset), a latest transmit offset (LatestTransmitOffset), and jitter (Jitter).

The earliest transmit offset indicates an earliest offset (relative to a start time point of a periodicity) of time at which the talker may start to send a data frame in a sending periodicity. A value is a signed integer, and a unit is nanosecond (ns).

The latest transmit offset indicates a latest offset (relative to a start time point of a periodicity) of time at which the talker may start to send a data frame in a sending periodicity. A value is a signed integer, and a unit is ns.

The jitter indicates a maximum time difference between a transmit offset of the talker and ideal synchronous network time. A value is an unsigned integer, and a unit is ns. The jitter is for defining a time error introduced by talker implementation, instead of a time synchronization error.

The user-to-network requirement defines a user requirement, for example, a delay or redundancy, and includes two fields: a quantity of redundant paths (NumSeamlessTrees) and maximum latency (MaxLatency).

The quantity of redundant paths indicates a quantity of redundant paths that are seamlessly connected and that a network is needed to provide. When the field is 0, it indicates that there is one path and no redundancy. When the quantity of needed redundant paths is greater than a quantity of paths that can be provided by the network, some redundant paths share a same path.

The maximum latency indicates maximum latency of a data frame from the talker to a listener. A value is a signed integer, and a unit is ns. When a stream has a plurality of listeners, if the talker defines a value, delays to all listeners need to meet the value; or if the talker defines no value, but the listener defines a value, all delays need to meet the value defined by the listener.

The interface capability of the end node includes a VLAN tag capability, a stream identifier type, and a sequence encoding and decoding type. The VLAN tag capability is for defining whether the talker supports adding or deleting a VLAN tag. The stream identifier type is for defining a stream identifier type supported by the talker. The sequence encoding and decoding type is for defining a frame duplication and deduplication sequence encoding and decoding type supported by the talker.

The listener group information includes information such as the stream identifier, the end station interface, the user-to-network requirement, and the interface capability of the end node. For a specific definition of the listener group information, refer to specific content in the talker group information. Details are not described herein again.

In the system, the CNC may separately send the status group information to the talker and the listener via the CUC, to notify that TSN configuration succeeds or fails.

The status group information includes information such as the stream identifier, a TSN stream configuration status (StatusInfo), accumulated latency (AccumulatedLatency), an interface configuration (InterfaceConfiguration), and a list of interfaces that fail to be configured (FailedInterfaces).

The TNS stream configuration status includes the following three fields: a talker network configuration status, a listener network configuration status, and error code.

A value of the field corresponding to the talker network configuration status may be 0, 1, or 2. When the value of the field is 0, it indicates that no talker is detected; when the value of the field is 1, it indicates that the talker is ready (in other words, configured); or when the value of the field is 2, it indicates that the talker fails to be configured.

A value of the field corresponding to the listener network configuration status may be 0, 1, 2, or 3. When the value of the field is 0, it indicates that no listener is detected; when the value of the field is 1, it indicates that the listener is ready (in other words, configured); when the value of the field is 2, it indicates that one or more listeners are ready and one or more listeners fail to be configured, where a stream may be used if the listener is ready; or when the value of the field is 3, it indicates that all listeners fail to be configured.

The accumulated latency defines possible maximum latency of a currently planned transmission path. A value is a signed integer, and a unit is ns.

The interface configuration defines interface configurations of the talker and listener. The configuration meets a stream requirement and an interface capability requirement. The following configurations are included: a MAC address, a VLAN tag, an IPv4 tuple, an IPv6 tuple, and a time offset (TimeAwareOffset).

The time offset defines a time offset used by the talker to transmit a data packet, and the time offset is between the earliest transmit offset and the latest transmit offset. In other words, the time offset is packet sending time of the talker.

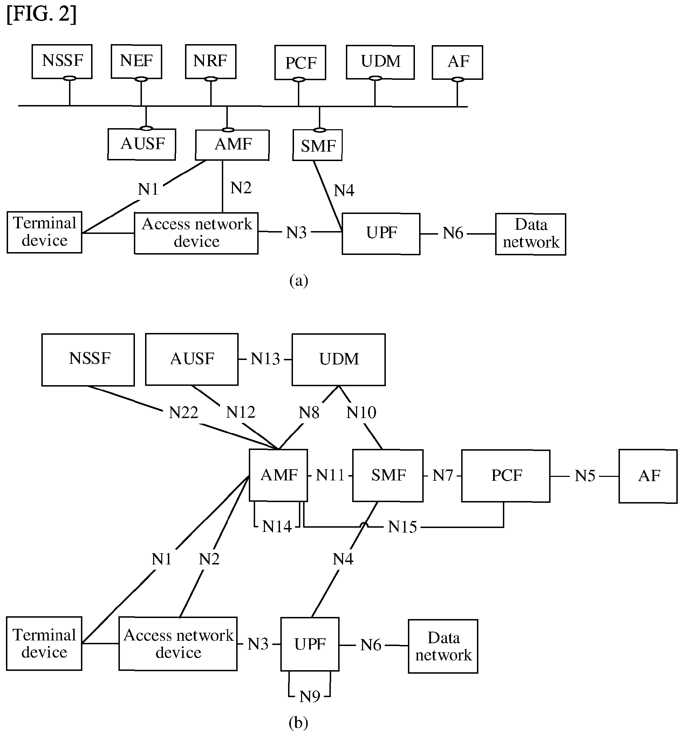

FIG. 2 is a diagram of a 5G system architecture to which an embodiment of this application is applicable. It may be understood that a 5G system to which this application is applicable may include a service-based non-roaming architecture shown in (a) in FIG. 2, and may further include a reference point-based non-roaming architecture shown in (b) in FIG. 2.

In this embodiment, the 5G system may include a terminal device, an access network device, and a core network device.

The terminal device may also be referred to as a terminal, user equipment (user equipment, UE), a mobile station (mobile station, MS), a mobile terminal (mobile terminal, MT), or the like, and may be an entity that is on a user side and that is configured to receive or transmit a signal, for example, a mobile phone. The terminal device includes a handheld device, a vehicle-mounted device, a wearable device, or a computing device that has a wireless communication function. For example, the UE may be a mobile phone (mobile phone), a tablet computer, or a computer with a wireless transceiver function. Alternatively, the terminal device may be a virtual reality (virtual reality, VR) terminal device, an augmented reality (augmented reality, AR) terminal device, a wireless terminal in industrial control, a wireless terminal in self driving, a wireless terminal in telemedicine, a wireless terminal in a smart grid, a wireless terminal in a smart city (smart city), a wireless terminal in a smart home (smart home), or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, self driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like.

The access network device is a device that provides access for the terminal device, and includes a radio access network (radio access network, RAN) device and an access network (access network, RAN). The RAN device is mainly a wireless network device in a 3GPP network, and the AN device may be an access network device defined in non-3GPP. The RAN device is mainly responsible for functions on an air interface side, such as radio resource management, quality of service (quality of service, QoS) management, and data compression and encryption. The RAN device may include base stations in various forms, for example, a macro base station, a micro base station (which is also referred to as a small cell), a relay station, and an access point. The RAN device includes but is not limited to a next generation base station (gNodeB, gNB) in a 5G communication system, a next generation base station in a 6G mobile communication system, a base station in another future mobile communication system, an access node in a Wi-Fi system, or a base station device like an evolved NodeB (evolved NodeB, eNB) in a long term evolution (long term evolution, LTE) system. The RAN device may alternatively be a home base station (for example, a home evolved NodeB or a home NodeB, HNB), a baseband unit (baseband unit, BBU), a transmission reception point (transmission reception point, TRP), a transmitting point (transmitting point, TP), or the like.

The core network device includes an access and mobility management function (access and mobility management function, AMF) network element, an SMF network element, a PCF network element, an application function (application function, AF) network element, and a UPF network element.

The AMF network element is mainly responsible for mobility management in a mobile network, such as user location update, user network registration, and user switching.

The SMF network element is mainly responsible for session management in the mobile network, such as session establishment, modification, and release. Specific functions are, for example, allocating an IP address to a user and selecting a UPF that provides a packet forwarding function.

The UPF network element is mainly responsible for forwarding and receiving user data in the terminal device. The UPF network element may receive user data from a data network, and transmit the user data to the terminal device via the access network device; or may receive user data from the terminal device via the access network device, and forward the user data to the data network. A transmission resource and a scheduling function that are in the UPF network element and that provide a service for the terminal device are managed and controlled by the SMF network element.

The PCF network element mainly supports providing a unified policy framework to control network behavior, providing a policy rule for a control layer network function, and is responsible for obtaining user subscription information related to policy decision.

The AF network element mainly supports interacting with a 3GPP core network to provide a service, for example, affecting a data routing decision and a policy control function, or providing some third-party services for a network side.

It may be understood that the 5G system may further include a unified data management (unified data management, UDM) network element, a network exposure function (network exposure function, NEF) network element, and another network element. The UDM network element is configured to generate an authentication credential, process a subscriber identifier (for example, store and manage a subscription permanent identifier), control access authorization, manage subscription data, and the like. The NEF network element is mainly for capability supporting and event exposure.

An entity in this application may also be referred to as a network element or a functional entity. For example, an AMF entity may also be referred to as an AMF network element or an AMF functional entity. For another example, an SMF entity may also be referred to as an SMF network element or an SMF functional entity.

In the 5G system, the network element in the access network device allows interconnection and interworking between the terminal device and the 3GPP core network by using a non-3GPP technology. The non-3GPP technology is, for example, wireless fidelity (wireless fidelity, Wi-Fi), worldwide interoperability for microwave access (worldwide interoperability for microwave access, WiMAX), a code division multiple access (code division multiple access, CDMA) network, or the like.

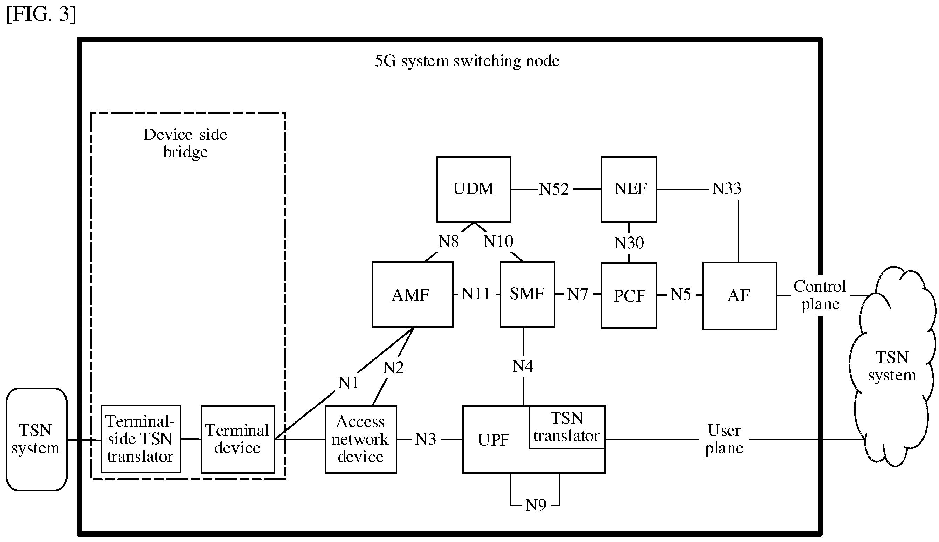

In some possible application scenarios, a 5G system may interwork with a TSN network, to reduce a transmission delay of the 5G system. FIG. 3 is a diagram of a network architecture in which a 5G system interworks with a TSN network.

As shown in FIG. 3, the 5G system and TSN translators (TSN Translators) are entirely used as a logical TSN switching node (namely, a TSN bridge), to implement an assumption of a function of a switching node in the TSN. The TSN translator converts and adapts a feature and information of a 5G network into information needed by the TSN, and provides the information to a TSN system, or converts information needed by the TSN system into a feature or information for the 5G network, and provides the feature or the information for the 5G system.

On a control plane, the 5G system exchanges information with a node in the TSN system via a TSN translator (namely, an AF network element in 5G) on the control plane. The exchanged information includes: capability information of a 5G system switching node, TSN configuration information, time scheduling information of a TSN input/output port, time synchronization information, and the like.

The AF network element provides the capability information of the 5G system switching node for a CNC in the TSN system, and the CNC determines, based on the capability information of the 5G system switching node and capability information of another TSN switching node, the TSN configuration information (for example, a sending time window and a stream periodicity) of the 5G system switching node for a TSN service. The AF network element provides, for the 5G system switching node, the TSN configuration information determined by the CNC for the 5G system switching node, to ensure an end-to-end deterministic delay.

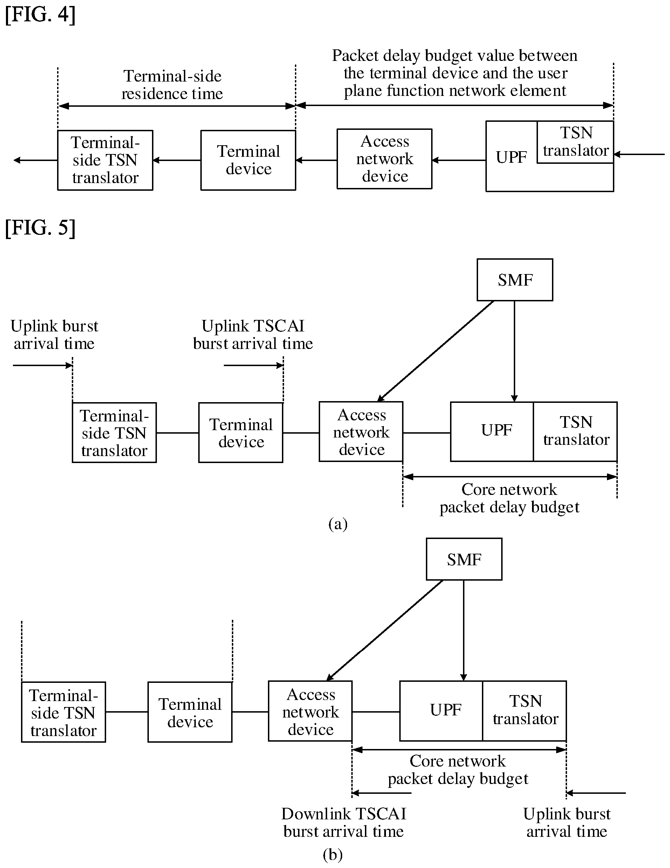

The capability information of the 5G system switching node includes an internal processing delay of the 5G system switching node, a UE-side transmission delay of the 5G system switching node, and a UPF-side transmission delay of the 5G system switching node. The internal processing delay of the 5G system switching node may further include UE-side residence time (namely, processing dwell time of a TSN packet in UE and a UE-side TSN translator), UPF-side residence time (namely, processing dwell time of the TSN packet in a UPF and a UPF-side TSN translator), and a transmission delay between the UE and the UPF, which is specifically represented as a packet delay budget (packet delay budget, PDB) value of the TSN packet between the UE and the UPF. A downlink is used as an example. The internal processing delay of the 5G system switching node may be shown in FIG. 4.

On a user plane, the UPF network element in the 5G system receives a downlink TSN stream of the TSN system or sends an uplink TSN stream to the TSN system via a UPF-side TSN translator. The TSN translator may be integrated into the UPF network element or independently deployed from the UPF network element. In this embodiment, the UPF-side TSN translator may also be referred to as a network-side TSN translator (network-side TSN Translator, NW-TT).

On the user plane, the UE in the 5G system receives an uplink TSN stream of the TSN system or sends a downlink TSN stream to the TSN system via a UE-side TSN translator. The TSN translator may be integrated into the UE or independently deployed from the UE. In this embodiment, the UE-side TSN translator may also be referred to as a device-side TSN translator (device-side TSN Translator, DS-TT).

The following describes a delay of a TSN stream in a 5G system with reference to FIG. 5. (a) in FIG. 5 shows an uplink direction, and (b) in FIG. 5 shows a downlink direction.

An AF network element may obtain scheduling information of the TSN stream from a CNC, and determine a time sensitive communication assistance container (time sensitive communication assistance container, TSCAC) based on the scheduling information of the TSN stream.

The TSCAC may include time at which the TSN stream arrives at an ingress of the 5G system (which may be referred to as first burst arrival time).

In an example, in the uplink direction, the time at which the TSN stream arrives at the ingress of the 5G system is time at which the TSN stream arrives at an ingress of a DS-TT, for example, uplink burst arrival time (UL burst arrival time) in (a) in FIG. 5. The uplink burst arrival time herein may also be referred to as uplink TSCAC burst arrival time.

In another example, in the downlink direction, time at which the TSN stream arrives at the ingress of the 5G system is time at which the TSN stream arrives at an ingress of an NW-TT, for example, downlink burst arrival time (DL burst arrival time) in (b) in FIG. 5. The downlink burst arrival time herein may also be referred to as downlink TSCAC burst arrival time.

Optionally, the TSCAC may further include a stream direction and a periodicity. The stream direction indicates whether the TSN stream is in the uplink direction or the downlink direction, and the periodicity indicates an interval between two pieces of burst start time.

In addition, the AF network element may further provide the TSCAC to an SMF network element via a PCF network element. The SMF network element further obtains TSC assistance information (TSC assistance information, TSCAI) through calculation based on the TSCAC, and sends the TSCAI to an access network device, so that the access network device can reserve a resource in advance.

The TSCAI may include first burst arrival time, a stream direction, and a periodicity. The first burst arrival time may be determined based on the foregoing first burst arrival time, the stream direction is consistent with the stream direction in the TSCAC, and the periodicity is consistent with the periodicity in the TSCAC.

In an example, in the uplink direction, second burst arrival time is time at which the TSN stream is sent from UE, for example, uplink TSCAI burst arrival time (UL TSCAI burst arrival time) in (a) in FIG. 5. In this example, a method for determining the UL TSCAI burst arrival time by the SMF is as follows:

UL TSCAI burst arrival time=UL burst arrival time+UE-side residence time.

In another example, in the downlink direction, second burst arrival time is time at which the TSN stream arrives at an NG-RAN, for example, downlink TSCAI burst arrival time (DL TSCAI burst arrival time) in (b) in FIG. 5. In this example, a method for determining the DL TSCAI burst arrival time by the SMF is as follows:

DL TSCAI burst arrival time=DL burst arrival time+Downlink core network packet delay budget (DL CN PDB).

In the system, the SMF network element may bind a service flow (namely, a data flow) to a quality of service (quality of service, QoS) flow. In other words, there is a correspondence between the QoS flow and the service flow. For a TSC service, it is generally considered that the QoS flow is in one-to-one correspondence with the service flow.

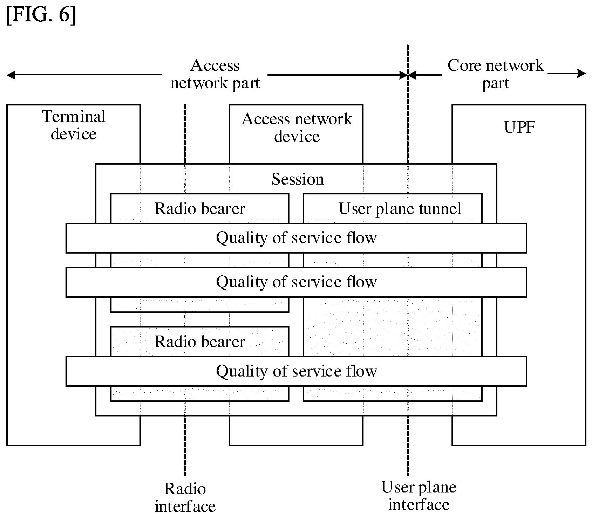

In a 5G system, to ensure end-to-end quality of service of a service, a QoS flow-based 5G QoS model is proposed, as shown in FIG. 6. The 5G QoS model supports a guaranteed bit rate quality of service flow (guaranteed bit rate QoS Flow, GBR QoS Flow) and a non-guaranteed bit rate quality of service flow (Non-GBR QoS Flow). Same transmission processing (such as scheduling or an admission threshold) is performed on data packets controlled by using a same QoS flow.

A terminal device may establish one or more sessions (for example, PDU sessions) with the 5G network, and one or more QoS flows may be established in each session. Each QoS flow is identified by one QoS flow identifier (QoS Flow Identifier, QFI), and the QFI uniquely identifies one QoS flow in the session.

Each QoS flow has its own feature information, and an SMF sends a QoS profile to a RAN. The QoS file includes a 5G QoS identifier 5QI (the 5QI is an index of a QoS feature).

The QoS feature includes a PDB, and the PDB defines an upper limit of possible delay time of a data packet between UE and a UPF.

The PDB includes a 5G access network packet delay budget (5G-AN PDB) and a core network packet delay budget (CN PDB). The CN PDB represents a delay between any N6 termination point at a UPF (for any UPF that may be selected for the session) and a 5G-AN with a given PDB. The 5G-AN PDB is determined by subtracting a value of the CN PDB from the PDB. The CN PDB may be a static value or a dynamic value, depending on implementation of a 5GS bridge.

The QoS feature further includes a maximum data burst volume (maximum data burst volume, MDBV) that needs to be served in a 5G-AN PDB periodicity. Each 5QI that is standardized (of a delay-critical GBR resource type) has a default MDBV value. The MDBV may alternatively be dynamically delivered to the RAN. If the RAN receives a dynamically delivered MDBV, the RAN should use the dynamically delivered MDBV instead of the default value.

In the system, the 5G network may generate an MDBV in QoS information based on a TSC burst size (TSC burst size). A maximum TSC burst size is considered as a maximum data volume in a time period equal to a 5G-AN PDB value of a 5QI. An MDBV of the 5QI to which a maximum value of the TSC burst size is mapped should be greater than or equal to the maximum value of the TSC burst size. When interworking is performed with an external TSN, the 5QI should also have a PDB value that meets a bridge delay capability of a corresponding service type. When interworking is performed with an external TSC, the MDBV of the 5QI to which the maximum value of the TSC burst size should be mapped should also be greater than or equal to the maximum value of the TSC burst size.

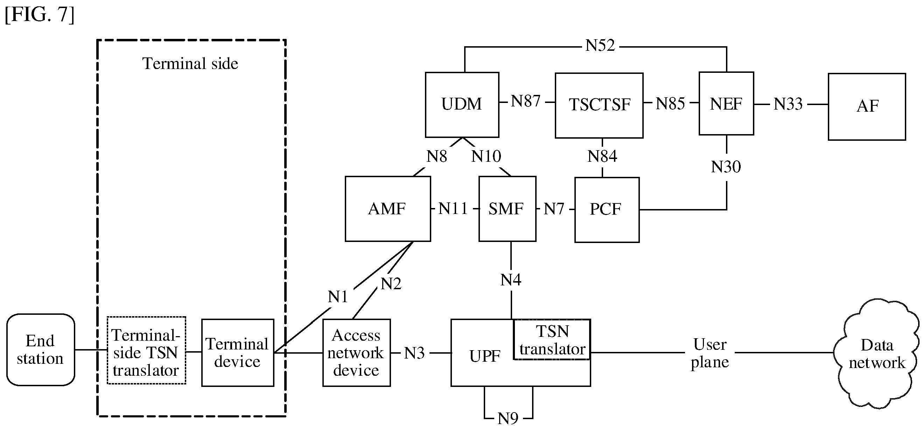

In this application, a network that interworks with a 5G system may not be limited to a TSN network, for example, may be a TSC service in a non-TSN network. A network architecture in which the 5G system interworks with the TSC service in the non-TSN network may be shown in FIG. 7. In the system, a TSCAC may be sent to an SMF network element via an AF network element or a time sensitive communication and time synchronization function (time sensitive communication and time synchronization function, TSCTSF) network element. For a method for determining TSCAI by the SMF network element based on the TSCAC, refer to the network architecture shown in FIG. 3. Details are not described herein again.

For ease of understanding, this application uses an example in which the network that interworks with the 5G system is the TSN network for description.

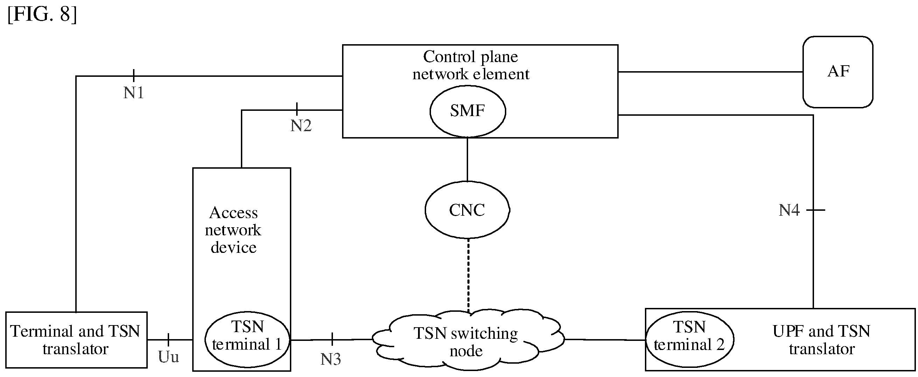

As shown in FIG. 8, when a 5G network interworks with a TSN network, a control plane network element (for example, an SMF network element) in a 5G system may be used as a CUC network element in the TSN network, and an access network device and a UPF network element in the 5G system may be respectively used as a TSN terminal 1 and a TSN terminal 2. In this application, the SMF network element used as the CUC network element in the TSN network may also be represented as an SMF or a CUC.

In an uplink direction, the access network device is used as a talker, and the UPF network element is used as a listener. In a downlink direction, the UPF network element is used as a talker, and the access network device is used as a listener. Therefore, the access network device in FIG. 8 further includes an access network talker/listener (access network talker/listener, AN-TL), and the UPF network element may further include a core network talker/listener (core network talker/listener, CN-TL).

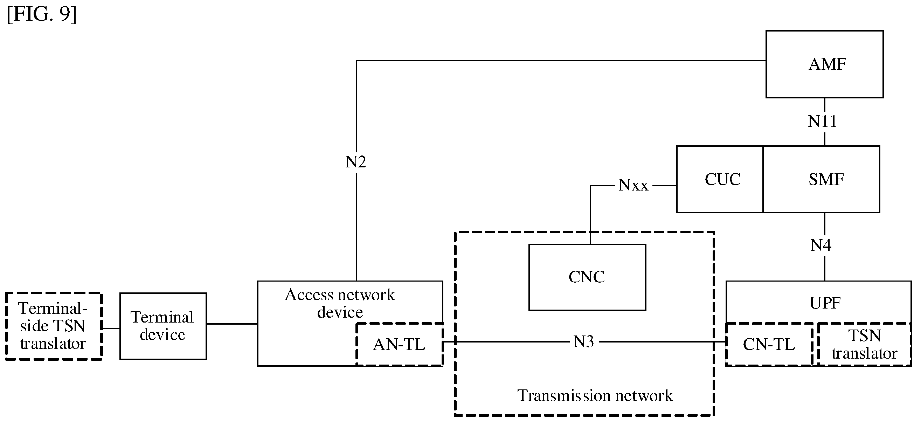

With reference to FIG. 3, the network architecture in which the 5G network interworks with the TSN network may alternatively be shown in FIG. 9.

When the 5G network interworks with the TSN network, an SMF network element may generate talker group information and listener group information, and send the talker group information/listener group information to the CNC network element in the TSN system, so that the CNC network element can configure a TSN terminal based on the talker group information/listener group information. The talker group information/listener group information may also be referred to as a merged stream requirement (merged stream requirement). The merged stream requirement information includes a traffic specification-related parameter, and the traffic specification-related parameter includes parameters such as an interval, a maximum frame length, a maximum quantity of frames in a periodicity, an earliest transmit offset, a latest transmit offset, jitter, and a user-to-network requirement.

The SMF may generate the interval based on a traffic periodicity indicated in TSCAI.

The SMF may generate the maximum frame length based on a maximum value of a TSC burst size of a QoS flow. The SMF may determine the maximum frame length according to the following formula: Maximum frame length=Maximum value of a TSC burst size-Framing bits (such as a CRC and a GTP-U tunnel header) that are not for transmission in a 5G system.

The SMF may determine the earliest transmit offset based on first burst arrival time or second burst arrival time.

In an example, in an uplink direction, the SMF may determine the earliest transmit offset according to the following formula: Earliest transmit offset=Uplink TSCAI burst arrival time+5G-AN PDB-k1×interval. k1 is an integer.

In another example, in a downlink direction, the SMF may determine the earliest transmit offset according to the following formula: Earliest transmit offset=Downlink TSCAC burst arrival time+UPF-side residence time-k2×interval. k2 is an integer.

The SMF may generate the jitter based on a local configuration.

The SMF may determine the latest transmit offset based on the earliest transmit offset, the interval, the jitter, and the maximum frame length. The SMF may determine the latest transmit offset according to the following formula: Latest transmit offset=Earliest transmit offset+Interval-(Jitter+Time for transmitting the maximum frame length).

The SMF may generate the user-to-network requirement based on a time difference between a CN PDB and the UPF-side residence time.

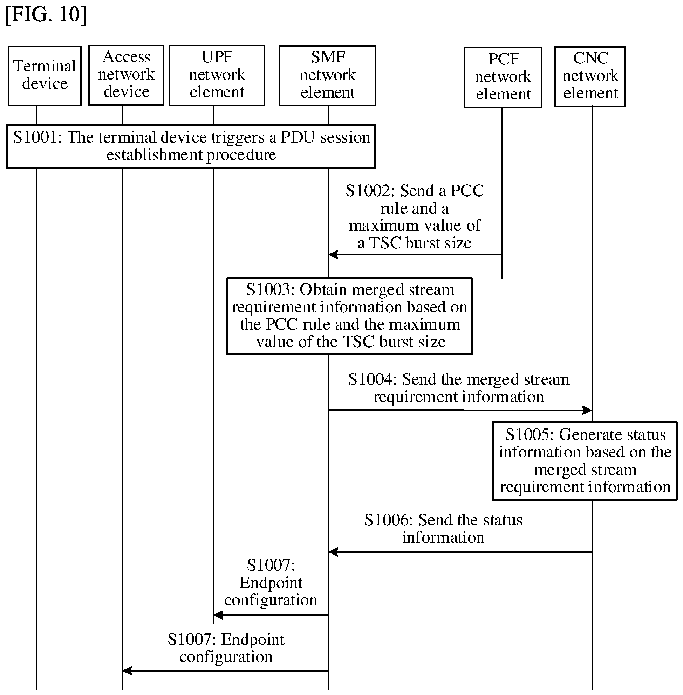

FIG. 10 is a schematic flowchart of a communication method. In S1001, a terminal device triggers a session establishment procedure. In S1002, a PCF network element sends a PCC rule and quality of service flow information to an SMF network element, where the PCC rule includes TSCAC information, and the quality of service flow information includes an MDBV value and a maximum value of a TSC burst size. Correspondingly, the SMF network element receives the PCC rule and the quality of service flow information, and may establish a QoS flow based on the MDBV value in the quality of service flow information, and send the QoS flow information to an access network device and a UPF network element. In S1003, the SMF network element obtains merged stream requirement information based on the PCC rule and the maximum value of the TSC burst size. In S1004, the SMF network element sends the merged stream requirement information to a CNC. In S1005, the CNC network element generates status information (also referred to as a merged end station communication configuration) based on the merged stream requirement information. In S1006, the CNC network element sends the status information to the SMF network element. Correspondingly, the SMF network element receives the status information. In S1007, the SMF network element configures the access network device and the UPF network element based on the status information.

However, in this method, when generating some parameters (for example, maximum frame length and a latest transmit offset) in the merged stream requirement information, the SMF network element needs to first obtain the maximum value of the TSC burst size from the PCF network element in the 5G system, and then calculate the maximum frame length and the latest transmit offset based on the maximum value of the TSC burst size. In addition, the SMF network element further obtains the MDBV value from the PCF network element, and the MDBV value may be greater than or equal to the maximum value of the TSC burst size. Therefore, when the maximum value of the TSC burst size is transmitted between the PCF network element and the SMF network element and the MDBV value is equal to the maximum value of the TSC burst size, a problem of high transmission overheads occurs.

In view of this, this application provides a communication method, to resolve a problem of high transmission overheads in a conventional technology.

In the technical solutions of this application, when determining that a 5G system interworks with a TSN or there is an interworking requirement between the 5G system and the TSN, a PCF network element sets a maximum value of a burst size to an MDBV value, and sends the MDBV value to an SMF network element, so that the SMF network element can determine merged stream requirement information based on the MDBV value. In this way, the SMF network element may not need to generate the merged stream requirement information based on the maximum value of the TSC burst size. In other words, such a parameter, namely, the maximum value of the TSC burst size, may not need to be transmitted between the PCF network element and the SMF network element, so that system transmission overheads are reduced. In addition, the MDBV value is equal to the maximum value of the TSC burst size, so that the PCF network element can accurately transmit the maximum value of the TSC burst size to the PCF network element based on the MDBV value, to obtain accurate merged stream requirement information.

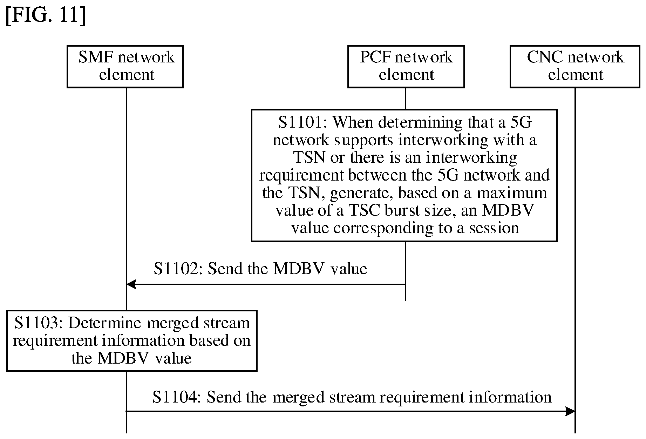

FIG. 11 is a diagram of a communication method according to an embodiment of this application. As shown in FIG. 11, the communication method may include S1101 to S1104.

In this embodiment, a terminal device may be configured to trigger a session establishment procedure or a session modification procedure.

S1101: When determining that a 5G network supports interworking with a TSN or there is an interworking requirement between the 5G network and the TSN, a PCF network element generates, based on a maximum value of a TSC burst size, an MDBV value corresponding to a session, where the MDBV value is equal to the maximum value of the TSC burst size.

In this embodiment, the PCF network element may determine, based on indication information, that the 5G network supports interworking with the TSN or there is an interworking requirement between the 5G network and the TSN.

In an example, the indication information may be sent by an SMF network element.

In this example, the indication information may directly or indirectly indicate that the 5G network supports interworking with the TSN or there is an interworking requirement between the 5G network and the TSN.

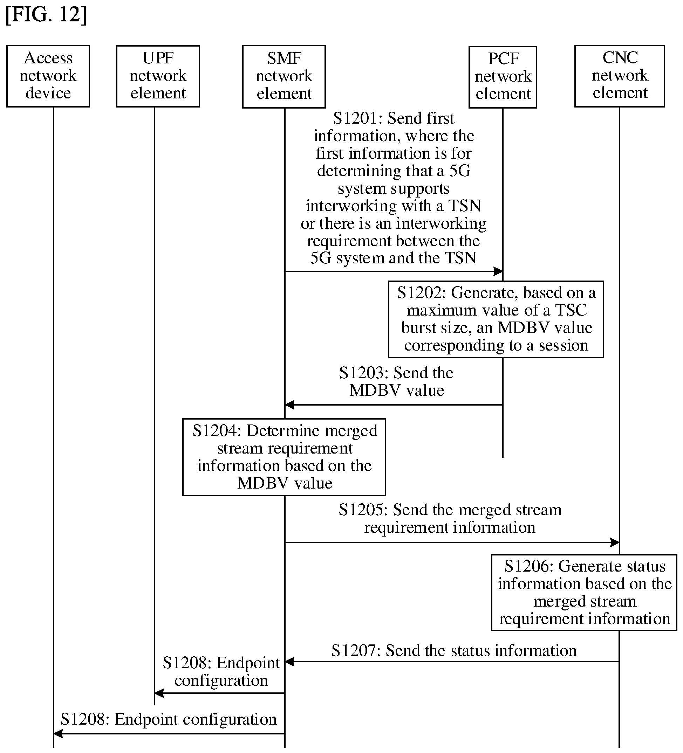

For ease of understanding, this example is subsequently described in detail with reference to FIG. 12 in this application.

In another example, the indication information may be sent by an AF network element.

In this example, the indication information may directly or indirectly indicate that the 5G network supports interworking with the TSN or there is an interworking requirement between the 5G network and the TSN.

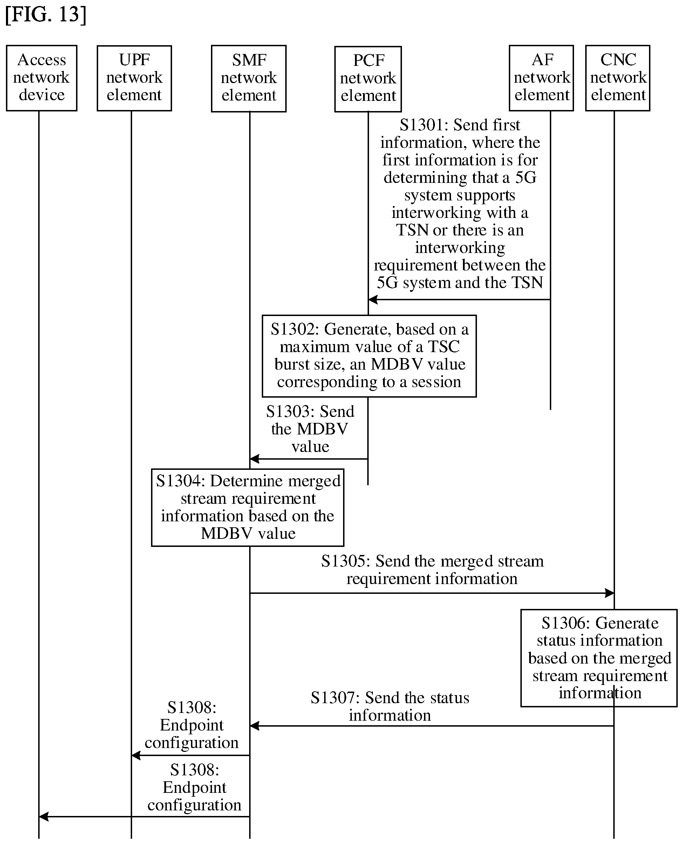

For ease of understanding, this example is subsequently described in detail with reference to FIG. 13 in this application.

Optionally, the PCF network element may alternatively determine, based on a data network name and/or network slice information, whether the 5G network supports interworking with the TSN or whether there is an interworking requirement between the 5G network and the TSN.

In an example, the PCF network element may obtain session association information sent by an SMF network element, and then determine, based on the session association information and a local configuration, whether the 5G network supports interworking with the TSN or whether there is an interworking requirement between the 5G network and the TSN. The session association information may include the data network name and/or the network slice information that correspond/corresponds to the session.

For example, it is assumed that the local configuration includes a data network name and/or network slice information for supporting interworking with the TSN. When the local configuration includes the session association information, the PCF network element determines that the 5G network supports interworking with the TSN or there is an interworking requirement between the 5G network and the TSN. When the local configuration does not include the session association information, the PCF network element determines that the 5G network does not support interworking with the TSN or there is no interworking requirement between the 5G network and the TSN.

For another example, it is assumed that the local configuration includes a network identifier and indication information corresponding to the network identifier, the network identifier may include at least one data network name and/or at least one piece of network slice information, and the indication information indicates whether interworking with the TSN is supported. When the local configuration includes the session association information and indication information corresponding to the session association information indicates that interworking with the TSN is supported, the PCF network element determines that the 5G network supports interworking with the TSN or there is an interworking requirement between the 5G network and the TSN. Otherwise, the PCF network element determines that the 5G network does not support interworking with the TSN or there is no interworking requirement between the 5G network and the TSN.

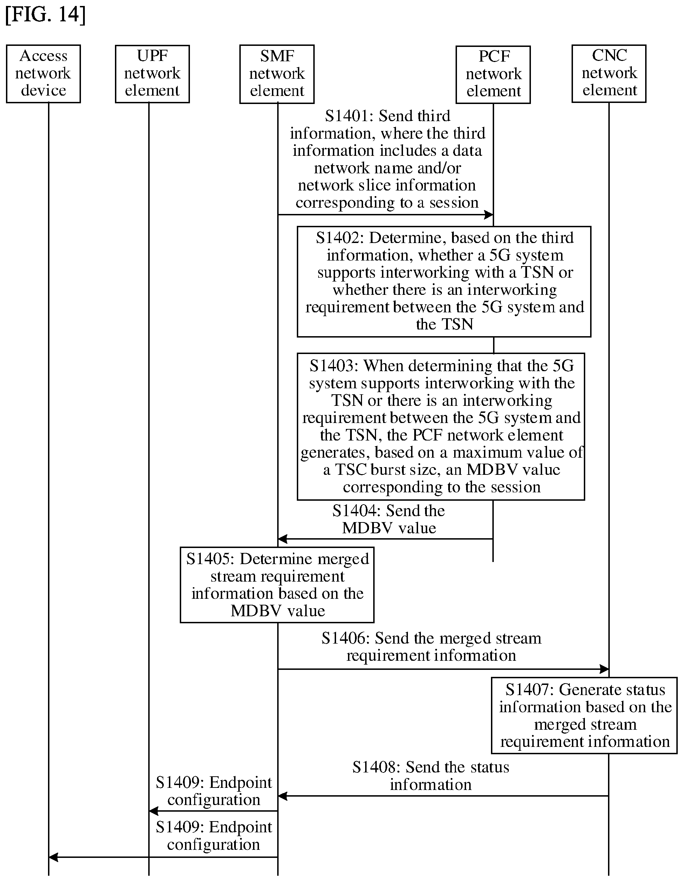

For ease of understanding, this example is subsequently described in detail with reference to FIG. 14 in this application.

In another example, the PCF network element may obtain association information of an AF request, and determine, based on the association information of the AF request and preset configuration information, whether the 5G network supports interworking with the TSN or whether there is an interworking requirement between the 5G network and the TSN. The association information of the AF request may include a data network name and/or network slice information that correspond/corresponds to the AF request.

For example, it is assumed that a local configuration includes a data network name and/or network slice information for supporting interworking with the TSN. When the local configuration includes the association information of the AF request, the PCF network element determines that the 5G network supports interworking with the TSN or there is an interworking requirement between the 5G network and the TSN. When the local configuration does not include the association information of the AF request, the PCF network element determines that the 5G network does not support interworking with the TSN or there is no interworking requirement between the 5G network and the TSN.

For another example, it is assumed that a local configuration includes a network identifier and indication information corresponding to the network identifier, the network identifier may include a data network name and/or network slice information that correspond/corresponds to each of at least one AF request, and the indication information indicates whether interworking with the TSN is supported. When the local configuration includes the association information of the AF request and indication information corresponding to the association information of the AF request

17

indicates that interworking with the TSN is supported, the PCF network element determines that the 5G network supports interworking with the TSN or there is an interworking requirement between the 5G network and the TSN. Otherwise, the PCF network element determines that the 5G network does not support interworking with the TSN or there is no interworking requirement between the 5G network and the TSN.

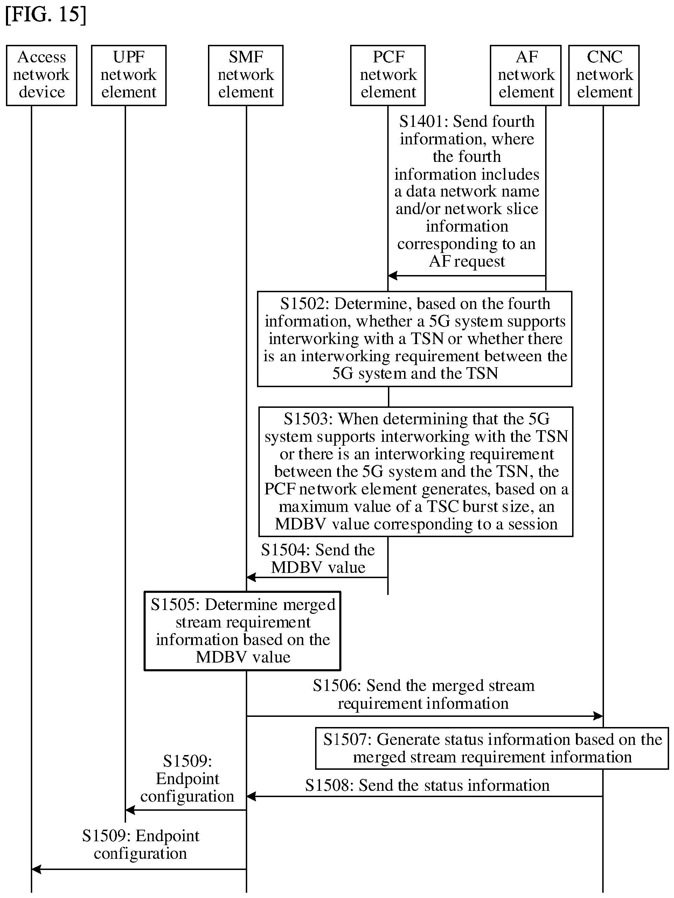

For ease of understanding, this example is subsequently described in detail with reference to FIG. 15 in this application.

In this embodiment, the PCF network element may first obtain the maximum value of the TSC burst size from the AF network element, and then set the MDBV value to a value equal to the maximum value of the TSC burst size, that is, set the MDBV value to be equal to the maximum value of the TSC burst size.

Further, when determining that the 5G network supports interworking with the TSN or there is an interworking requirement between the 5G network and the TSN, the PCF network element may set, when generating a PCC rule corresponding to the session, the MDBV value to a value equal to the maximum value of the TSC burst size.

It may be understood that setting the MDBV value to be equal to the maximum value of the TSC burst size does not adversely affect an existing function of an MDBV (to be specific, scheduling/admission control of a RAN). Instead, a new function of representing a maximum burst size of a service flow (for example, a TSN/TSC stream or an aggregated TSN/TSC stream) in a data network is added.

S1102: The PCF network element sends the MDBV value to the SMF network element. Correspondingly, the SMF network element receives the MDBV value.

S1103: The SMF network element determines merged stream requirement information based on the MDBV value.

In this embodiment, the merged stream requirement information may also be referred to as talker/listener group information, and the merged stream requirement information may include a maximum frame length and/or a latest transmit offset.

When the merged stream requirement information includes the maximum frame length, the SMF network element may calculate the maximum frame length according to Formula (1):

$$S=S1-S2 \ (1)$$

S represents the maximum frame length, S1 represents the MDBV value, and S2 represents framing bits (such as a CRC and a GTP-U tunnel header) that are not for transmission in a 5G system.

When the merged stream requirement information includes the latest transmit offset, the SMF network element may calculate the latest transmit offset according to Formula (2):

$$a=b+c-(d+t_S) \ (2)$$

a represents an earliest transmit offset, b represents an interval, c represents jitter, and $t_s$ represents time for transmitting the maximum frame length. In this embodiment, for calculation of the earliest transmit offset, the interval, and the jitter, refer to a conventional technology. Details are not described herein.

In this embodiment, after obtaining the maximum frame length through calculation according to Formula (1), the SMF network element may locally store a value of the maximum frame length. In this way, the SMF network element may calculate the latest transmit offset based on the locally stored value of the maximum frame length.

Optionally, when calculating the latest transmit offset, the SMF network element may first obtain a value of the maximum frame length through calculation according to Formula (1), and then calculate the latest transmit offset based on the value of the maximum frame length obtained through calculation.

S1104: The SMF network element sends the merged stream requirement information to a CNC network element.

In this embodiment, after the SMF network element sends the merged stream requirement information to the CNC network element, the CNC network element may generate status information based on the merged stream requirement information, and send the status information to the SMF network element. Correspondingly, after receiving the status information, the SMF network element may configure an access network device and a UPF network element based on the status information. In this method, when calculating the merged stream requirement information (for example, the maximum frame length and the latest transmit offset), the SMF network element may directly perform calculation based on the MDBV value obtained from the PCF network element. In this way, the SMF network element may not need to additionally obtain such a parameter, namely, the maximum value of the TSC burst size, from the PCF network element, so that transmission overheads are reduced. In addition, in this method, the MDBV value is equal to the maximum value of the TSC burst size, so that the merged stream requirement information obtained by the SMF network element through calculation based on the MDBV value is equivalent to merged stream requirement information obtained by the SMF network element through calculation based on the maximum value of the TSC burst size in the conventional technology, to obtain accurate merged stream requirement information.

Next, the solutions of this application are further described in this application with reference to FIG. 12 to FIG. 15.

FIG. 12 is a schematic flowchart of a communication method according to an embodiment of this application. As shown in FIG. 12, the communication method includes S1201 to S1208.

S1201: An SMF network element sends first information to a PCF network element, where the first information is for determining that a 5G system supports interworking with a TSN or there is an interworking requirement between the 5G system and the TSN. Correspondingly, the PCF network element receives the first information.

In this embodiment, the first information is the indication information sent by the SMF network element to the PCF network element in the embodiment shown in FIG. 11. The step may be used during session establishment or session modification.

That the 5G system supports interworking with the TSN indicates that a 5G system network can control a TSN function of a transmission network deployed on a communication interface (for example, an N3 interface). Optionally, the communication interface may further include an N9 interface.

In this embodiment, the first information may directly or indirectly indicate that the 5G system supports interworking with the TSN or there is an interworking requirement between the 5G system and the TSN.

In an implementation, the first information includes indication information indicating that the SMF network element supports interworking with the TSN or there is an interworking requirement between the SMF network element and the TSN.

It may be understood that, when determining that the SMF network element in the 5G network supports interworking with the TSN or there is an interworking requirement between the SMF network element in the 5G network and the TSN, the PCF network element may determine that the 5G network supports interworking with the TSN or there is an interworking requirement between the 5G network and the TSN.

Optionally, the SMF network element may generate the first information based on a condition. The condition includes at least one of the following conditions: The SMF network element has a function of a CUC network element, a data network name corresponding to a session is applicable to a time sensitive communication service, and network slice information corresponding to the session is applicable to a time sensitive communication service.

Optionally, the SMF network element may alternatively generate the first information based on port information of an access network device and/or a UPF network element. The port information may include information such as an interface capability, an end station interface, and a cache capability.

In this implementation, before the SMF network element sends the first information to the PCF network element, the PCF network element may further send second information to the SMF network element. The second information indicates the SMF network element to send the first information to the PCF network element when the SMF network element supports interworking with the TSN or there is an interworking requirement between the SMF network element and the TSN.

In an example, the PCF network element may first send a PCC rule to the SMF network element, where the PCC rule carries the second information.

Optionally, the second information may further indicate the SMF network element to send sub-information to the PCF network element when the interworking requirement between the 5G system and the TSN changes, where the sub-information indicates that the interworking requirement between the 5G system and the TSN changes.

Optionally, after receiving the sub-information, the PCF network element may further indicate the SMF network element to send a changed value to the PCF. Alternatively, when sending the sub-information to the PCF network element, the SMF network element may send the changed value to the PCF network element.

In another example, the second information may include a policy control request trigger (policy control request trigger), and then the SMF network element may send the first information to the PCF network element based on the policy control request trigger.

Specifically, the policy control request trigger may be used to: when the SMF network element supports interworking with the TSN, trigger the SMF network element to send the second information to the PCF network element.

Optionally, the policy control request trigger may be further used to: when the interworking requirement between the SMF network element and the TSN changes, trigger the SMF network element to send sub-information to the PCF network element, where the sub-information indicates that the interworking requirement between the 5G system and the TSN changes.

It may be understood that, in this implementation, the first information performs indication directly.

In another implementation, the first information may include at least one of the following conditions: The SMF network element has a function of a centralized user configuration CUC network element, a data network name corresponding to a session is applicable to a time sensitive communication service, and network slice information corresponding to the session is applicable to a time sensitive communication service.

Optionally, the first information may further include port information that is from an access network device and/or a user plane function UPF network element and that is determined by the SMF network element. The port information may include information such as an interface capability, an end station interface, and a cache capability.

It may be understood that, in this implementation, the first information performs indication indirectly.

S1202: The PCF network element generates, based on a maximum value of a TSC burst size, an MDBV value corresponding to the session, where the MDBV value is equal to the maximum value of the TSC burst size.

In an implementation, the first information performs indication directly. In this way, after receiving the first information from the SMF network element, the PCF network element generates, based on the maximum value of the TSC burst size, the MDBV value corresponding to the session.

In another implementation, the first information performs indication indirectly. In this way, after receiving the first information from the SMF network element, the PCF network element first determines, based on the first information, that the SMF network element supports interworking with the TSN or there is an interworking requirement between the SMF network element and the TSN, and then generates, based on the maximum value of the TSC burst size, the MDBV value corresponding to the session.

S1203: The PCF network element sends the MDBV value to the SMF network element. Correspondingly, the SMF network element receives the MDBV value.

S1204: The SMF network element determines merged stream requirement information based on the MDBV value.

In this embodiment, for a method for determining the merged stream requirement information by the SMF network element based on the MDBV value, refer to S1103 in the embodiment shown in FIG. 11. Details are not described herein again.

S1205: The SMF network element sends the merged stream requirement information to a CNC network element. Correspondingly, the CNC network element receives the merged stream requirement information.

S1206: The CNC network element generates status information based on the merged stream requirement information.

S1207: The CNC network element sends the status information to the SMF network element. Correspondingly, the SMF network element receives the status information.

S1208: The SMF network element configures the access network device and the UPF network element based on the status information.

In this embodiment, for specific implementations of S1205 to S1208, refer to a conventional technology. Details are not described herein.

In the embodiment shown in FIG. 12, the PCF network element determines, based on the first information sent by the SMF network element, that the 5G network supports interworking with the TSN or there is an interworking requirement between the 5G network and the TSN.

In this embodiment, after receiving the first information from the SMF network element, the PCF network element sets the MDBV value to a value equal to the maximum value of the TSC burst size, and then sends the MDBV value to the SMF network element, so that the SMF network element can calculate the merged stream requirement information based on the MDBV value. In this way, the SMF network element does not need to additionally obtain such a parameter, namely, the maximum value of the TSC burst size, from the PCF network element, and directly performs calculation based on the MDBV value obtained from the PCF network element. This can reduce transmission overheads, and accurate merged stream requirement information can be obtained.

FIG. 13 is a schematic flowchart of a communication method according to another embodiment of this application. As shown in FIG. 13, the communication method includes S1301 to S1308.

S1301: An AF network element sends first information to a PCF network element, where the first information is for determining that a 5G system supports interworking with a TSN or there is an interworking requirement between the 5G system and the TSN. Correspondingly, the PCF network element receives the first information.

In this embodiment, the first information is the indication information sent by the AF network element to the PCF network element in the embodiment shown in FIG. 11. The step may be used during session establishment or session modification.

That the 5G system supports interworking with the TSN indicates that a 5G system network can control a TSN function of a transmission network deployed on a communication interface (for example, an N3 interface). Optionally, the communication interface may further include an N9 interface.

In this embodiment, the first information may directly or indirectly indicate that the 5G system supports interworking with the TSN or there is an interworking requirement between the 5G system and the TSN.

In an implementation, the first information includes indication information indicating that the AF network element supports interworking with the TSN or there is an interworking requirement between the AF network element and the TSN.

It may be understood that, when determining that the AF network element in the 5G network supports interworking with the TSN or there is an interworking requirement between the AF network element in the 5G network and the TSN, the PCF network element may determine that the 5G network supports interworking with the TSN or there is an interworking requirement between the 5G network and the TSN.

Optionally, the AF network element may generate the first information based on a condition. The condition includes at least one of the following conditions: A delay requirement in an AF request is less than or equal to a preset threshold, the AF request includes assistance container information, and the AF request includes burst arrival time information.

For example, the delay requirement in the AF request may include a PDB, and the preset threshold may be two milliseconds or three milliseconds.

It may be understood that, in this implementation, the first information performs indication directly.

In another implementation, the first information includes at least one of the following conditions: A delay requirement in an AF request is less than or equal to a preset threshold, the AF request includes assistance container information, and the AF request includes burst arrival time information.

It may be understood that, in this implementation, the first information performs indication indirectly.

S1302: The PCF network element generates, based on a maximum value of a TSC burst size, an MDBV value corresponding to a session, where the MDBV value is equal to the maximum value of the TSC burst size.

In an implementation, the first information performs indication directly. In this way, after receiving the first information from the AF network element, the PCF network element generates, based on the maximum value of the TSC burst size, the MDBV value corresponding to the session.

In another implementation, the first information performs indication indirectly. In this way, after receiving the first information from the AF network element, the PCF network element first determines, based on the first information, that an SMF network element supports interworking with the TSN or there is an interworking requirement between the SMF network element and the TSN, and then generates, based on the maximum value of the TSC burst size, the MDBV value corresponding to the session.

S1303: The PCF network element sends the MDBV value to the SMF network element. Correspondingly, the SMF network element receives the MDBV value.

S1304: The SMF network element determines merged stream requirement information based on the MDBV value.

In this embodiment, for a method for determining the merged stream requirement information by the SMF network element based on the MDBV value, refer to S1103 in the embodiment shown in FIG. 11. Details are not described herein again.

S1305: The SMF network element sends the merged stream requirement information to a CNC network element. Correspondingly, the CNC network element receives the merged stream requirement information.

S1306: The CNC network element generates status information based on the merged stream requirement information.

S1307: The CNC network element sends the status information to the SMF network element. Correspondingly, the SMF network element receives the status information.

S1308: The SMF network element configures an access network device and a UPF network element based on the status information.

In this embodiment, for specific implementations of S1305 to S1308, refer to a conventional technology. Details are not described herein.

In the embodiment shown in FIG. 13, the PCF network element determines, based on the first information sent by the AF network element, that the 5G network supports interworking with the TSN or there is an interworking requirement between the 5G network and the TSN.

In this embodiment, after receiving the first information from the AF network element, the PCF network element sets the MDBV value to a value equal to the maximum value of the TSC burst size, and then sends the MDBV value to the SMF network element, so that the SMF network element can calculate the merged stream requirement information based on the MDBV value. In this way, the SMF network element does not need to additionally obtain such a parameter, namely, the maximum value of the TSC burst size, from the PCF network element, and directly performs calculation based on the MDBV value obtained from the PCF network element. This can reduce transmission overheads, and accurate merged stream requirement information can be obtained.

FIG. 14 is a schematic flowchart of a communication method according to still another embodiment of this application. As shown in FIG. 14, the communication method includes S1401 to S1409.

S1401: An SMF network element sends third information to a PCF network element, where the third information includes a data network name and/or network slice information that correspond/corresponds to a session.

The third information corresponds to the session association information in the embodiment shown in FIG. 11.

S1402: The PCF network element determines, based on the third information, whether a 5G system supports interworking with a TSN or whether there is an interworking requirement between the 5G system and the TSN.

When determining, based on the third information, whether the 5G system supports interworking with the TSN or whether there is an interworking requirement between the 5G system and the TSN, the PCF network element may determine, based on the third information and a local configuration, whether the 5G system supports interworking with the TSN or whether there is an interworking requirement between the 5G system and the TSN.

In a possible implementation, the local configuration of the PCF network element may include a data network name and/or network slice information for supporting interworking with the TSN (or indicating that there is an interworking requirement with the TSN). When the local configuration includes the third information, the PCF network element determines that the 5G network supports interworking with the TSN or there is an interworking requirement between the 5G network and the TSN. When the local configuration does not include the third information, the PCF network element determines that the 5G network does not support interworking with the TSN.

In a first example, the local configuration includes at least one data network name for supporting interworking with the TSN. If the at least one data network name in the local configuration includes the data network name corresponding to the session in the third information, the PCF determines that the 5G network supports interworking with the TSN. If the at least one data network name in the local configuration does not include the data network name corresponding to the session in the third information, the PCF determines that the 5G network does not support interworking with the TSN.

For example, it is assumed that the local configuration includes a data network name 1 and a data network name 2. If the data network name corresponding to the session in the third information is the data network name 1 or the data network name 2, the PCF determines that the 5G network supports interworking with the TSN. If the data network name corresponding to the session in the third information is another data network name (for example, a data network name 3), the PCF determines that the 5G network does not support interworking with the TSN.

In a second example, the local configuration includes at least one piece of network slice information for supporting interworking with the TSN. If the at least one piece of network slice information in the local configuration includes the network slice information in the third information, the PCF determines that the 5G network supports interworking with the TSN. If the at least one piece of network slice information in the local configuration does not include the network slice information in the third information, the PCF determines that the 5G network does not support interworking with the TSN.

For example, it is assumed that the local configuration includes network slice information 1 and network slice information 2. If the network slice information corresponding to the session in the third information is the network slice information 1 or the network slice information 2, the PCF determines that the 5G network supports interworking with the TSN. If the network slice information corresponding to the session in the third information is other network slice information (for example, network slice information 3), the PCF determines that the 5G network does not support interworking with the TSN.

In a third example, the local configuration includes at least one pair of a data network name and network slice information for supporting interworking with the TSN. If the at least one pair of the data network name and the network slice information in the local configuration includes the data network name and the network slice information in the third information, the PCF determines that the 5G network supports interworking with the TSN or there is an interworking requirement between the 5G network and the TSN. If the at least one pair of the data network name and the network slice information in the local configuration does not include the data network name and the network slice information in the third information, the PCF determines that the 5G network does not support interworking with the TSN or there is no interworking requirement between the 5G network and the TSN.

For example, it is assumed that the local configuration includes three pairs of information. A first pair of information includes a data network name 1 and network slice information A, a second pair of information includes a data network name 2 and network slice information B, and a third pair of information includes a data network name 3 and network slice information C. If the data network name and the network slice information that correspond to the session in the third information are any one of the three pairs of information, the PCF determines that the 5G network supports interworking with the TSN. Otherwise, the PCF determines that the 5G network does not support interworking with the TSN.

In another possible implementation, the local configuration of the PCF network element may include a network identifier and indication information corresponding to the network identifier, the network identifier may include at least one data network name and/or at least one piece of network slice information, and the indication information indicates whether interworking with the TSN is supported (or indicates whether there is an interworking requirement with the TSN). When the network identifier in the local configuration includes the third information and indication information corresponding to the third information indicates that interworking with the TSN is supported, the PCF network element determines that the 5G network supports interworking with the TSN. Otherwise, the PCF network element determines that the 5G network does not support interworking with the TSN.

When the network identifier includes the data network name, the local configuration may be shown in Table 1.

Table 1: Local configuration

| Data network name | Whether interworking with a TSN is supported |
|---|---|
| Data network name 1 | Yes |

(continued)

| Data network name | Whether interworking with a TSN is supported |
|---|---|
| Data network name 2 | No |
| Data network name 3 | No |

According to Table 1, when the data network name in the third information is the data network name 1, the PCF network element determines that the 5G network supports interworking with the TSN. When the data network name in the third information is the data network name 2 or the data network name 3, the PCF network element determines that the 5G network does not support interworking with the TSN.

When the network identifier includes the network slice information, the local configuration may be shown in Table 2.

Table 2: Local configuration

| Network slice information | Whether interworking with a TSN is supported |
|---|---|
| Network slice information A | Yes |
| Network slice information B | No |
| Network slice information C | No |

According to Table 2, when the network slice information in the third information is the network slice information A, the PCF network element determines that the 5G network supports interworking with the TSN. When the network slice information in the third information is the network slice information B or the network slice information C, the PCF network element determines that the 5G network does not support interworking with the TSN.

When a session identifier includes the data network name and the network slice information, the local configuration may be shown in Table 3.

Table 3: Local configuration

| Data network name | Network slice information | Whether interworking with a TSN is supported |
|---|---|---|
| Data network name 1 | Network slice information A | Yes |
| Data network name 1 | Network slice information B | No |
| Data network name 3 | Network slice information A | No |

According to Table 3, when the data network name in the third information is the data network name 1 and the network slice information is the network slice information A, the PCF network element determines that the 5G network supports interworking with the TSN. When the data network name in the third information is the data network name 1 and the network slice information is the network slice information B, the PCF network element determines that the 5G network does not support interworking with the TSN. When the data network name in the third information is the data network name 3 and the network slice information is the network slice information A, the PCF network element determines that the 5G network does not support interworking with the TSN.

S1403: When determining that the 5G system supports interworking with the TSN or there is an interworking requirement between the 5G system and the TSN, the PCF network element generates, based on a maximum value of a TSC burst size, an MDBV value corresponding to the session, where the MDBV value is equal to the maximum value of the TSC burst size.

S1404: The PCF network element sends the MDBV value to the SMF network element. Correspondingly, the SMF network element receives the MDBV value.

S1405: The SMF network element determines merged stream requirement information based on the MDBV value.

S1406: The SMF network element sends the merged stream requirement information to a CNC network element. Correspondingly, the CNC network element receives the merged stream requirement information.

S1407: The CNC network element generates status information based on the merged stream requirement information.

S1408: The CNC network element sends the status information to the SMF network element. Correspondingly, the SMF network element receives the status information.

S1408: The SMF network element configures an access network device and a UPF network element based on the status information.

In this embodiment, for S1403 to S1405, refer to related content in the embodiment shown in FIG. 11. Details are not described herein again.

In this embodiment, for specific implementations of S1406 to S1409, refer to a conventional technology. Details are not described herein.

In the embodiment shown in FIG. 14, the PCF network element determines, based on the third information sent by the SMF network element and the local configuration, whether the 5G network supports interworking with the TSN or whether there is an interworking requirement between the 5G network and the TSN.

In this embodiment, when determining that the 5G network supports interworking with the TSN or there is an interworking requirement between the 5G network and the TSN, the PCF network element sets the MDBV value to a value equal to the maximum value of the TSC burst size, and then sends the MDBV value to the SMF network element, so that the SMF network element can calculate the merged stream requirement information based on the MDBV value. In this way, the SMF network element does not need to additionally obtain such a parameter, namely, the maximum value of the TSC burst size, from the PCF network element, and directly performs calculation based on the MDBV value obtained from the PCF network element. This can reduce transmission overheads, and accurate merged stream requirement information can be obtained.

FIG. 15 is a schematic flowchart of a communication method according to yet another embodiment of this application. As shown in FIG. 15, the communication method includes S1501 to S1509.

S1501: An AF network element sends fourth information to a PCF network element, where the fourth information includes a data network name and/or network slice information that correspond/corresponds to an AF request.

The fourth information corresponds to the association information of the AF request in the embodiment shown in FIG. 11.

S1502: The PCF network element determines, based on the fourth information, whether a 5G system supports interworking with a TSN or whether there is an interworking requirement between the 5G system and the TSN.

When determining, based on the fourth information, whether the 5G system supports interworking with the TSN or whether there is an interworking requirement between the 5G system and the TSN, the PCF network element may determine, based on the fourth information and a local configuration, whether the 5G system supports interworking with the TSN or whether there is an interworking requirement between the 5G system and the TSN.

In this embodiment, the method in which the PCF network element determines, based on the fourth information and the local configuration, whether the 5G system supports interworking with the TSN or whether there is an interworking requirement between the 5G system and the TSN is consistent with the method in which the PCF network element determines, based on the third information and the local configuration, whether the 5G system supports interworking with the TSN or whether there is an interworking requirement between the 5G system and the TSN in the embodiment shown in FIG. 14. Details are not described herein again.

S1503: When determining that the 5G system supports interworking with the TSN or there is an interworking requirement between the 5G system and the TSN, the PCF network element generates, based on a maximum value of a TSC burst size, an MDBV value corresponding to a session, where the MDBV value is equal to the maximum value of the TSC burst size.

S1504: The PCF network element sends the MDBV value to an SMF network element. Correspondingly, the SMF network element receives the MDBV value.

S1505: The SMF network element determines merged stream requirement information based on the MDBV value.

S1506: The SMF network element sends the merged stream requirement information to a CNC network element. Correspondingly, the CNC network element receives the merged stream requirement information.

S1507: The CNC network element generates status information based on the merged stream requirement information.

S1508: The CNC network element sends the status information to the SMF network element. Correspondingly, the SMF network element receives the status information.

S1509: The SMF network element configures an access network device and a UPF network element based on the status information.

In this embodiment, for S1503 to S1505, refer to related content in the embodiment shown in FIG. 11. Details are not described herein again.

In this embodiment, for specific implementations of S1506 to S1509, refer to a conventional technology. Details are not described herein.

In the embodiment shown in FIG. 15, the PCF network element determines, based on the fourth information sent by the AF network element and the local configuration, whether the 5G network supports interworking with the TSN or whether there is an interworking requirement between the 5G network and the TSN.

In this embodiment, when determining that the 5G network supports interworking with the TSN or there is an interworking requirement between the 5G network and the TSN, the PCF network element sets the MDBV value to a value equal to the maximum value of the TSC burst size, and then sends the MDBV value to the SMF network element, so that the SMF network element can calculate the merged stream requirement information based on the MDBV value. In this way, the SMF network element does not need to additionally obtain such a parameter, namely, the maximum value of the TSC burst size, from the PCF network element, and directly performs calculation based on the MDBV value obtained from the PCF network element. This can reduce transmission overheads, and accurate merged stream requirement information can be obtained.

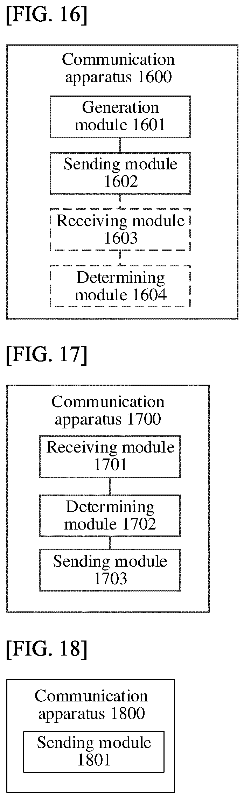

FIG. 16 is a diagram of a structure of a communication apparatus according to an embodiment of this application. As shown in FIG. 16, the communication apparatus 1600 may include a generation module 1601 and a sending module 1602. Optionally, the communication apparatus 1600 may further include a receiving module 1603.

In a first example, the communication apparatus 1600 may be configured to implement the communication method in the embodiment shown in FIG. 11. The generation module 1601 may be configured to perform S1101, and the sending module 1602 may be configured to perform S1102.

In a second example, the communication apparatus 1600 may be configured to implement the communication method in the embodiment shown in FIG. 12. The generation module 1601 may be configured to perform S1202, the sending module 1602 may be configured to perform S1203, and the receiving module 1603 may be configured to perform S1201.

In a third example, the communication apparatus 1600 may be configured to implement the communication method in the embodiment shown in FIG. 13. The generation module 1601 may be configured to perform S1302, the sending module 1602 may be configured to perform S1303, and the receiving module 1603 may be configured to perform S1301.

Optionally, the communication apparatus 1600 may further include a determining module 1604.

In a fourth example, the communication apparatus 1600 may be configured to implement the communication method in the embodiment shown in FIG. 14. The generation module 1601 may be configured to perform S1403, the sending module 1602 may be configured to perform S1404, the receiving module 1603 may be configured to perform S1401, and the determining module 1604 may be configured to perform S1402.

In a fifth example, the communication apparatus 1600 may be configured to implement the communication method in the embodiment shown in FIG. 15. The generation module 1601 may be configured to perform S1503, the sending module 1602 may be configured to perform S1504, the receiving module 1603 may be configured to perform S1501, and the determining module 1604 may be configured to perform S1502.

FIG. 17 is a diagram of a structure of a communication apparatus according to another embodiment of this application. As shown in FIG. 17, the communication apparatus 1700 may include a receiving module 1701, a determining module 1702, and a sending module 1703.

In a first example, the communication apparatus 1700 may be configured to implement the communication method in the embodiment shown in FIG. 11. The receiving module 1701 may be configured to perform S1102, the determining module 1702 may be configured to perform S1103, and the sending module 1703 may be configured to perform S1104.

In a second example, the communication apparatus 1700 may be configured to implement the communication method in the embodiment shown in FIG. 12. The receiving module 1701 may be configured to perform S1203, the determining module 1702 may be configured to perform S1204, and the sending module 1703 may be configured to perform S1205.

In a third example, the communication apparatus 1700 may be configured to implement the communication method in the embodiment shown in FIG. 13. The receiving module 1701 may be configured to perform S1303, the determining module 1702 may be configured to perform S1304, and the sending module 1703 may be configured to perform S1305.

In a fourth example, the communication apparatus 1700 may be configured to implement the communication method in the embodiment shown in FIG. 14. The receiving module 1701 may be configured to perform S1404, the determining module 1702 may be configured to perform S1405, and the sending module 1703 may be configured to perform S1406.

In a fifth example, the communication apparatus 1700 may be configured to implement the communication method in the embodiment shown in FIG. 15. The receiving module 1701 may be configured to perform S1504, the determining module 1702 may be configured to perform S1505, and the sending module 1703 may be configured to perform S1506.

FIG. 18 is a diagram of a structure of a communication apparatus according to still another embodiment of this application. As shown in FIG. 18, the communication apparatus 1800 may include a sending module 1801.

In a first example, the communication apparatus 1800 may be configured to implement the communication method in the embodiment shown in FIG. 13. The sending module 1801 may be configured to perform S1301.

In a second example, the communication apparatus 1800 may be configured to implement the communication method in the embodiment shown in FIG. 15. The sending module 1801 may be configured to perform S1501.

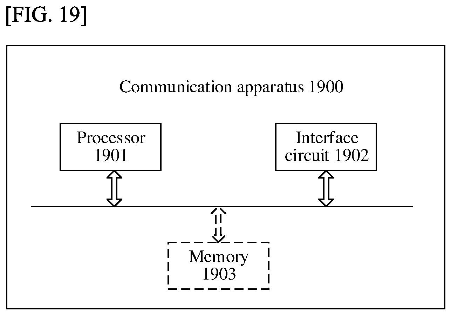

FIG. 19 is a diagram of a structure of a communication apparatus according to yet another embodiment of this application. As shown in FIG. 19, the communication apparatus 1900 includes a processor 1901 and an interface circuit 1902. The processor 1901 and the interface circuit 1902 are coupled to each other. It may be understood that the interface circuit 1902 may be a transceiver or an input/output interface. Optionally, the communication apparatus 1900 may further include a memory 1903, configured to store instructions to be executed by the processor 1901, store input data needed by the processor 1901 to run the instructions, or store data generated after the processor 1901 runs the instructions.

In a first example, the processor 1901 is configured to implement functions of the generation module 1601 and the determining module 1604, and the interface circuit 1902 is configured to implement functions of the sending module 1602 and the receiving module 1603.

In a second example, the processor 1901 is configured to implement a function of the determining module 1702, and the interface circuit 1902 is configured to implement functions of the receiving module 1701 and the sending module 1703.

In a third example, the interface circuit 1902 is configured to implement a function of the sending module 1801.

The communication apparatus 1900 may be a communication device, or may be a chip used in the communication device.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in the network device or the terminal device.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, all or some of the procedures or the functions in embodiments of this application are performed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are only used for differentiation for ease of description, and are not used to limit the scope of embodiments of this application. Sequence numbers of the foregoing processes do not mean execution sequences, and the execution sequences of the processes should be determined based on functions and internal logic of the processes.

**Claims**

1. A communication method, wherein the method is applied to a policy control function network element, and the method comprises:

    when determining that a cellular communication system supports interworking with a time sensitive network or there is an interworking requirement between the cellular communication system and the time sensitive network, generating, based on a maximum value of a time sensitive communication burst size of a time sensitive service flow in the time sensitive network, a maximum data burst volume value of a quality of service flow corresponding to the time sensitive service flow in the cellular communication system, wherein the maximum data burst volume value is equal to the maximum value of the time sensitive communication burst size; and

sending the maximum data burst volume value to a session management function network element, wherein the maximum data burst volume value is for determining merged stream requirement information associated with the quality of service flow.

2. The method according to claim 1, wherein the method further comprises:
receiving first information from a first network element, wherein the first information is for determining that the cellular communication system supports interworking with the time sensitive network or there is an interworking requirement between the cellular communication system and the time sensitive network.

3. The method according to claim 2, wherein the first network element is the session management function network element; and

the first information indicates at least one of the following: the session management function network element supports interworking with the time sensitive network, there is an interworking requirement between the session management function network element and the time sensitive network, the session management function network element has a function of a centralized user configuration network element, a data network name corresponding to a session to which the quality of service flow belongs is applicable to a time sensitive communication service, and network slice information corresponding to the session to which the quality of service flow belongs is applicable to a time sensitive communication service.

4. The method according to claim 3, wherein the method further comprises:
sending second information to the session management function network element, wherein the second information indicates the session management function network element to send the first information to the policy control function network element when the session management function network element supports interworking with the time sensitive network or there is an interworking requirement between the session management function network element and the time sensitive network.

5. The method according to claim 2, wherein the first network element is an application function network element; and the first information indicates at least one of the following: the application function network element supports interworking with the time sensitive network, there is an interworking requirement between the application function network element and the time sensitive network, a delay requirement in an application function request is less than or equal to a preset threshold, the application function request comprises assistance container information, and the application function request comprises burst arrival time information.

6. The method according to claim 1, wherein the determining that a cellular communication system supports interworking with a time sensitive network or there is an interworking requirement between the cellular communication system and the time sensitive network comprises:

receiving third information from the session management function network element, wherein the third information comprises a data network name and/or network slice information that correspond/corresponds to a session to which the quality of service flow belongs; and

determining, based on the third information, that the cellular communication system supports interworking with the time sensitive network or there is an interworking requirement between the cellular communication system and the time sensitive network.

7. The method according to claim 1, wherein the determining that a cellular communication system supports interworking with a time sensitive network or there is an interworking requirement between the cellular communication system and the time sensitive network comprises:

receiving fourth information from an application function network element, wherein the fourth information comprises a data network name and/or network slice information that correspond/corresponds to an application function request; and

determining, based on the fourth information, that the cellular communication system supports interworking with the time sensitive network or there is an interworking requirement between the cellular communication system and the time sensitive network.

8. The method according to any one of claims 1 to 7, wherein the merged stream requirement information comprises a maximum frame length and/or a latest transmit offset.

9. A communication method, wherein the method is applied to a session management function network element, and the method comprises:

receiving a maximum data burst volume value corresponding to a quality of service flow from a policy control function network element, wherein the quality of service flow corresponds to a time sensitive service flow in a time sensitive network, and the maximum data burst volume value is equal to a maximum value of a time sensitive communication burst size of the time sensitive service flow;

determining, based on the maximum data burst volume value, merged stream requirement information associated with the quality of service flow; and

sending the merged stream requirement information to a centralized network configuration network element in the time sensitive network.

10. The method according to claim 9, wherein before the receiving a maximum data burst volume value corresponding to a quality of service flow from the policy control function network element, the method further comprises:
sending first information to the policy control function network element, wherein the first information indicates that a cellular communication system supports interworking with the time sensitive network or there is an interworking requirement between the cellular communication system and the time sensitive network.

11. The method according to claim 10, wherein the first information comprises indication information indicating that the session management function network element supports interworking with the time sensitive network or there is an interworking requirement between the session management function network element and the time sensitive network.

12. The method according to claim 11, wherein the method further comprises:
generating the first information based on a condition, wherein the condition comprises at least one of the following: the session management function network element has a function of a centralized user configuration network element, a data network name corresponding to a session to which the quality of service flow belongs is applicable to a time sensitive communication service, and network slice information corresponding to the session to which the quality of service flow belongs is applicable to a time sensitive communication service.

13. The method according to claim 10, wherein the first information indicates at least one of the following: the session management function network element has a function of a centralized user configuration network element, a data network name corresponding to a session to which the quality of service flow belongs is applicable to a time sensitive communication service, and network slice information corresponding to the session to which the quality of service flow belongs is applicable to a time sensitive communication service.

14. The method according to any one of claims 10 to 13, wherein the method further comprises:

receiving second information from the policy control function network element; and
the sending first information to the policy control function network element comprises:
sending the first information to the policy control function network element based on the second information when the session management function network element supports interworking with the time sensitive network or there is an interworking requirement between the session management function network element and the time sensitive network.

15. The method according to any one of claims 9 to 14, wherein the merged stream requirement information comprises a maximum frame length and/or a latest transmit offset.

16. The method according to claim 15, wherein when the merged stream requirement information comprises the maximum frame length, the determining, based on the maximum data burst volume value, merged stream requirement information associated with the quality of service flow comprises:

determining a first difference between the maximum data burst volume value and a framing bit that is not for transmission; and
determining the maximum frame length based on the first difference.

17. The method according to claim 15, wherein when the merged stream requirement information comprises the latest transmit offset, the determining, based on the maximum data burst volume value, merged stream requirement information comprises:

determining the maximum frame length in the merged stream requirement information based on the maximum data burst volume value;
determining a first sum of jitter in the merged stream requirement information and transmission time corresponding to the maximum frame length;
determining a second sum of an earliest transmit offset and an interval in the merged stream requirement information;
determining a second difference between the second sum and the first sum; and
determining the latest transmit offset based on the second difference.

18. A communication method, wherein the method comprises:

when determining that a cellular communication system supports interworking with a time sensitive network or there is an interworking requirement between the cellular communication system and the time sensitive network, generating, by a policy control function network element based on a maximum value of a time sensitive communication burst size of a time sensitive service flow in the time sensitive network, a maximum data burst volume value of a quality of service flow corresponding to the time sensitive service flow in the cellular communication system, wherein the maximum data burst volume value is equal to the maximum value of the time sensitive communication burst size;
sending, by the policy control function network element, the maximum data burst volume value to a session management function network element;
determining, by the session management function network element based on the maximum data burst volume value, merged stream requirement information associated with the quality of service flow; and
sending, by the session management function network element, the merged stream requirement information to a centralized network configuration network element in the time sensitive network.

19. The method according to claim 18, wherein the method further comprises:

sending, by the session management function network element, third information to the policy control function network element, wherein the third information comprises a data network name and/or network slice information that correspond/corresponds to a session to which the quality of service flow belongs; and
determining, by the policy control function network element based on the third information, that the cellular communication system supports interworking with the time sensitive network or there is an interworking requirement between the cellular communication system and the time sensitive network.

20. The method according to claim 18 or 19, wherein the merged stream requirement information comprises a maximum frame length, and the determining, by the session management function network element based on the maximum data burst volume value, merged stream requirement information associated with the quality of service flow comprises:

determining a first difference between the maximum data burst volume value and a framing bit that is not for transmission; and
determining the maximum frame length based on the first difference.

21. A communication apparatus, comprising a functional module configured to implement the method according to any one of claims 1 to 8.

22. A communication apparatus, comprising a functional module configured to implement the method according to any one of claims 9 to 17.

23. A communication apparatus, comprising a memory and a processor, wherein

the memory is configured to store program instructions; and
the processor is configured to execute the program instructions in the memory to implement the method according to any one of claims 1 to 17.

24. A communication system, wherein the communication system comprises a policy control function network element and a session management function network element, and the policy control function network element and the session management function network element are configured to implement the method according to any one of claims 18 to 20.

25. A computer-readable storage medium, wherein the computer-readable storage medium is configured to store program code executed by a computer, and the program code comprises instructions for implementing the method according to any one of claims 1 to 17.

26. A computer program product, wherein the computer program product comprises instructions for implementing the communication method according to any one of claims 1 to 17.

[FIG. 1]

[FIG. 2]

(a)

(b)

[FIG. 3]

5G system switching node

Device-side bridge

UDM —N52— NEF —N33

N8    N10

N30

AMF —N11— SMF —N7— PCF —N5— AF

N1    N2

N4

Control plane

TSN system

Terminal-side TSN translator | Terminal device

Access network device —N3—

UPF | TSN translator

User plane

TSN system

N9

EP 4 614 938 A1

33

[FIG. 4]

Terminal-side
residence time

Packet delay budget value between
the terminal device and the user
plane function network element

| Terminal-side TSN translator | ← | Terminal device | ← | Access network device | ← | UPF | TSN translator | ← |

[FIG. 5]

SMF

Uplink burst
arrival time

Uplink TSCAI
burst arrival time

| Terminal-side TSN translator | — | Terminal device | — | Access network device | — | UPF | TSN translator |

Core network
packet delay budget

(a)

SMF

| Terminal-side TSN translator | — | Terminal device | — | Access network device | — | UPF | TSN translator |

Core network
packet delay budget

Downlink TSCAI
burst arrival time

Uplink burst
arrival time

(b)

[FIG. 6]

Access network part ← → Core network part

Terminal device | Access network device | UPF

Session

Radio bearer | User plane tunnel

Quality of service flow

Quality of service flow

Radio bearer

Quality of service flow

Radio interface | User plane interface

[FIG. 7]

[FIG. 8]

EP 4 614 938 A1

[FIG. 9]

[FIG. 10]

```
┌──────────┐ ┌──────────┐ ┌──────────┐ ┌──────────┐        ┌──────────┐ ┌──────────┐
│ Terminal │ │  Access  │ │   UPF    │ │   SMF    │        │   PCF    │ │   CNC    │
│  device  │ │ network  │ │ network  │ │ network  │        │ network  │ │ network  │
│          │ │  device  │ │ element  │ │ element  │        │ element  │ │ element  │
└────┬─────┘ └────┬─────┘ └────┬─────┘ └────┬─────┘        └────┬─────┘ └────┬─────┘
```

S1001: The terminal device triggers a PDU session establishment procedure

S1002: Send a PCC rule and a maximum value of a TSC burst size

S1003: Obtain merged stream requirement information based on the PCC rule and the maximum value of the TSC burst size

S1004: Send the merged stream requirement information

S1005: Generate status information based on the merged stream requirement information

S1006: Send the status information

S1007: Endpoint configuration

S1007: Endpoint configuration

[FIG. 11]

| SMF network element | | PCF network element | CNC network element |

S1101: When determining that a 5G network supports interworking with a TSN or there is an interworking requirement between the 5G network and the TSN, generate, based on a maximum value of a TSC burst size, an MDBV value corresponding to a session

S1102: Send the MDBV value

S1103: Determine merged stream requirement information based on the MDBV value

S1104: Send the merged stream requirement information

[FIG. 12]

[FIG. 13]

| Access network device | UPF network element | SMF network element | PCF network element | AF network element | CNC network element |
|---|---|---|---|---|---|

S1301: Send first information, where the first information is for determining that a 5G system supports interworking with a TSN or there is an interworking requirement between the 5G system and the TSN

S1302: Generate, based on a maximum value of a TSC burst size, an MDBV value corresponding to a session

S1303: Send the MDBV value

S1304: Determine merged stream requirement information based on the MDBV value

S1305: Send the merged stream requirement information

S1306: Generate status information based on the merged stream requirement information

S1307: Send the status information

S1308: Endpoint configuration

S1308: Endpoint configuration

[FIG. 14]

| Access network device | UPF network element | SMF network element | PCF network element | CNC network element |
|---|---|---|---|---|

S1401: Send third information, where the third information includes a data network name and/or network slice information corresponding to a session

S1402: Determine, based on the third information, whether a 5G system supports interworking with a TSN or whether there is an interworking requirement between the 5G system and the TSN

S1403: When determining that the 5G system supports interworking with the TSN or there is an interworking requirement between the 5G system and the TSN, the PCF network element generates, based on a maximum value of a TSC burst size, an MDBV value corresponding to the session

S1404: Send the MDBV value

S1405: Determine merged stream requirement information based on the MDBV value

S1406: Send the merged stream requirement information

S1407: Generate status information based on the merged stream requirement information

S1408: Send the status information

S1409: Endpoint configuration

S1409: Endpoint configuration

[FIG. 15]

| Access network device | UPF network element | SMF network element | PCF network element | AF network element | CNC network element |
|---|---|---|---|---|---|

S1401: Send fourth information, where the fourth information includes a data network name and/or network slice information corresponding to an AF request

S1502: Determine, based on the fourth information, whether a 5G system supports interworking with a TSN or whether there is an interworking requirement between the 5G system and the TSN

S1503: When determining that the 5G system supports interworking with the TSN or there is an interworking requirement between the 5G system and the TSN, the PCF network element generates, based on a maximum value of a TSC burst size, an MDBV value corresponding to a session

S1504: Send the MDBV value

S1505: Determine merged stream requirement information based on the MDBV value

S1506: Send the merged stream requirement information

S1507: Generate status information based on the merged stream requirement information

S1509: Endpoint configuration

S1508: Send the status information

S1509: Endpoint configuration

[FIG. 16]

Communication
apparatus 1600

Generation
module 1601

Sending module
1602

Receiving module
1603

Determining
module 1604

[FIG. 17]

Communication
apparatus 1700

Receiving module
1701

Determining
module 1702

Sending module
1703

[FIG. 18]

Communication
apparatus 1800

Sending module
1801

[FIG. 19]

Communication apparatus 1900

Processor 1901

Interface circuit 1902

Memory 1903

# EP 4 614 938 A1

## INTERNATIONAL SEARCH REPORT

| | International application No. |
|---|---|
| | **PCT/CN2023/130858** |

### A. CLASSIFICATION OF SUBJECT MATTER

H04L47/20(2022.01)i

According to International Patent Classification (IPC) or to both national classification and IPC

### B. FIELDS SEARCHED

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

3GPP, CNTXT, ENTXT, DWPI, CNKI: 敏感, 时延, 网络, 突发, 爆发, 最大, 流, 质量, cnc, cuc, mdbv, pcf, smf, tsc, tscai, tsn, burst, max+, qos, stream

### C. DOCUMENTS CONSIDERED TO BE RELEVANT

| Category* | Citation of document, with indication, where appropriate, of the relevant passages | Relevant to claim No. |
|---|---|---|
| X | CN 111756555 A (HUAWEI TECHNOLOGIES CO., LTD.) 09 October 2020 (2020-10-09) description, paragraphs 281-292 and 305-307 | 1-26 |
| A | US 2022255871 A1 (NOKIA SOLLUTIONS AND NETWORKS OY) 11 August 2022 (2022-08-11) entire document | 1-26 |
| A | ERICSSON. "MDBV mapping and configuration for TSC QoS Flow" *3GPP SA WG2 Meeting #S2-136AH S2-2000524*, 17 January 2020 (2020-01-17), entire document | 1-26 |
| A | HUAWEI et al. "QoS parameter handling for TSC" *3GPP TSG-WG SA2 Meeting #147E e-meeting S2-2107518*, 22 October 2021 (2021-10-22), entire document | 1-26 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **09 January 2024** | **22 January 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/130858**

| Patent document cited in search report | | | Publication date (day/month/year) | Patent family member(s) | | | Publication date (day/month/year) |
|---|---|---|---|---|---|---|---|
| CN | 111756555 | A | 09 October 2020 | WO | 2020192263 | A1 | 01 October 2020 |
| | | | | CN | 111865623 | A | 30 October 2020 |
| | | | | EP | 3869868 | A1 | 25 August 2021 |
| | | | | US | 2021282049 | A1 | 09 September 2021 |
| | | | | CN | 114244637 | A | 25 March 2022 |
| US | 2022255871 | A1 | 11 August 2022 | WO | 2020259793 | A1 | 30 December 2020 |
| | | | | EP | 3987732 | A1 | 27 April 2022 |
| | | | | WO | 2018234673 | A1 | 27 December 2018 |
| | | | | CN | 110785900 | A | 11 February 2020 |
| | | | | EP | 3642914 | A1 | 29 April 2020 |
| | | | | JP | 2020524406 | W | 13 August 2020 |
| | | | | US | 2021151950 | A1 | 20 May 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211437855
- CN 202310091053